(19) Europäisches Patentamt
European Patent Office
Office européen des brevets

(11) **EP 1 789 811 B1**

(12) **EUROPÄISCHE PATENTSCHRIFT**

(45) Veröffentlichungstag und Bekanntmachung des Hinweises auf die Patenterteilung:
**12.06.2013 Patentblatt 2013/24**

(21) Anmeldenummer: **05787256.6**

(22) Anmeldetag: **01.09.2005**

(51) Int Cl.:
***G01N 27/327*** (2006.01)

(86) Internationale Anmeldenummer:
**PCT/DE2005/001536**

(87) Internationale Veröffentlichungsnummer:
**WO 2006/029591 (23.03.2006 Gazette 2006/12)**

(54) **Biosensor-Anordnung und Verfahren zum Ermitteln eines Sensorereignisses**

Biosensor array and method for detecting a sensor event

Réseau de biocapteurs et procede pour determiner un evenement sensoriel

(84) Benannte Vertragsstaaten:
**FR GB**

(30) Priorität: **17.09.2004 DE 102004045210**

(43) Veröffentlichungstag der Anmeldung:
**30.05.2007 Patentblatt 2007/22**

(73) Patentinhaber: **Siemens Aktiengesellschaft**
**80333 München (DE)**

(72) Erfinder:
• **PAULUS, Christian**
**82362 Weilheim (DE)**

• **SCHIENLE, Meinrad**
**85521 Ottobrunn (DE)**
• **STAGNI DEGLI ESPOSTI, Claudio**
**I-40137 Bologna (IT)**
• **THEWES, Roland**
**82194 Gröbenzell (DE)**

(56) Entgegenhaltungen:
EP-A- 1 376 111          EP-A- 1 411 349
DE-A1- 10 224 567      DE-A1- 10 259 820
US-A- 5 294 889          US-A1- 2002 140 440

**Beschreibung**

Die Erfindung betrifft eine Biosensor-Anordnung und ein Verfahren zum Ermitteln eines Sensorereignisses an einem Biosensorelement.

Biosensor-Arrays und Chemosensor-Arrays dienen zum Nachweis von Molekülen in einem zu untersuchenden Analyten. Solche Arrays werden zum Zwecke einer Miniaturisierung zunehmend auf Chips realisiert. Die Sensoren sind häufig in einer großen Anzahl auf einem Substrat angeordnet. Das Substrat kann beispielsweise ein Halbleiterchip (Silizium) sein, insbesondere für den Fall, dass Funktionen eines integrierten elektronischen Schaltkreises realisiert werden sollen. Solche Substrate können alternativ aus Glas, Plastik oder einem anderen Material hergestellt werden, sofern keine aktive Elektronik zu deren Betrieb auf dem Substrat erforderlich ist. Der hohe Grad an Parallelisierung ermöglicht eine zeitgleiche parallele Durchführung unterschiedlicher Tests, beispielsweise Tests auf das Vorhandensein unterschiedlicher Substanzen (z.B. Moleküle) in einem vorgegebenen Analyten. Aufgrund dieser Eigenschaft ergeben sich für derartige Sensor-Anordnungen einschließlich entsprechendem Auswertesystem vielfältige Anwendungen in der medizinischen Diagnosetechnik, in der Pharmaindustrie, (z.B. für das Pharma-Screening, "high troughput screening", HTS), in der chemischen Industrie, in der Lebensmittel-Analytik, in der Umwelt- und Lebensmitteltechnik.

Das Grundprinzip vieler bekannter Sensoren beruht darauf, dass positionsspezifisch auf einem Chip zunächst sogenannte Fängermoleküle, z.B. unter Verwendung von MikroDispensiertechniken, aufgebracht und immobilisiert werden.

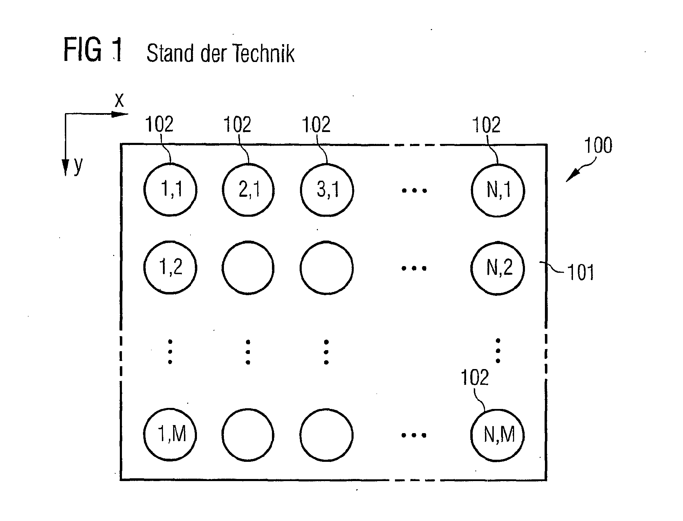

In Fig.1 ist eine aus dem Stand der Technik bekannte Sensor-Anordnung 100 gezeigt, bei der auf einem Chip 101 eine Vielzahl von Sensor-Feldern 102 matrixförmig angeordnet sind. Die Sensor-Felder 102 sind in N Spalten und in M Zeilen angeordnet, das heißt auf NxM-Positionen, wobei auf jedem Sensor-Feld unterschiedliche Fängermoleküle immobilisiert sind.

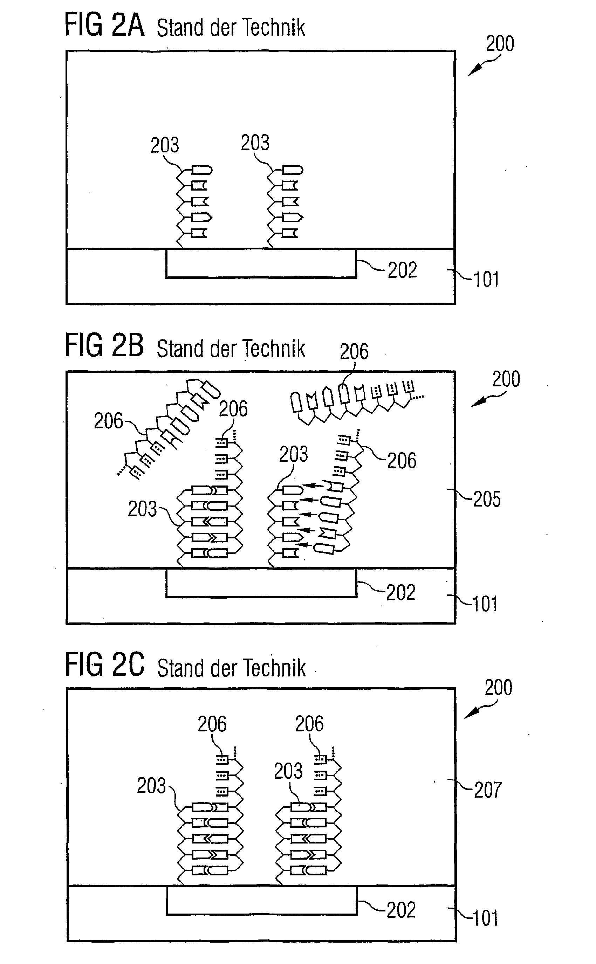

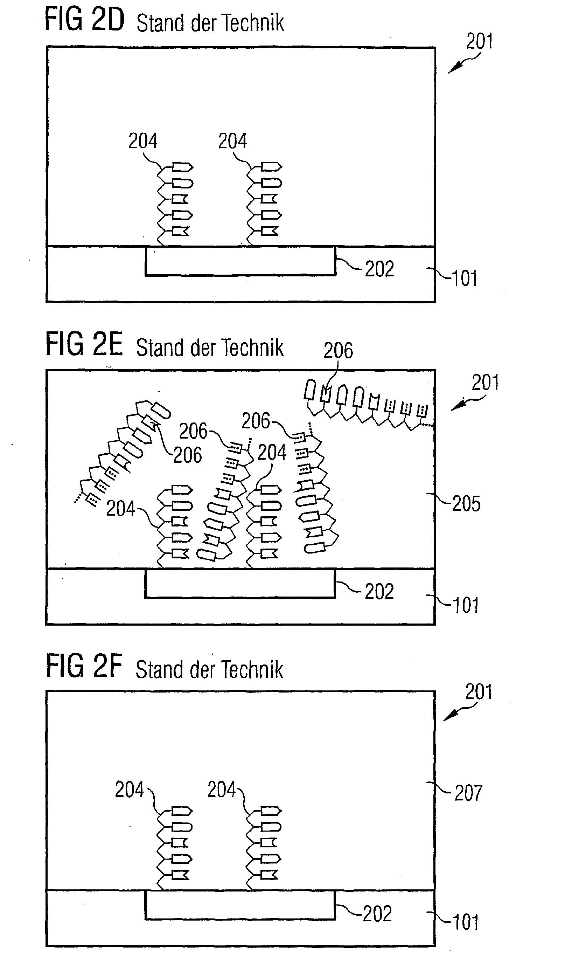

In Fig.2A bis Fig.2F ist jeweils eine schematische Querschnittsansicht einer der in Fig.1 gezeigten Sensor-Felder 102 gezeigt. Insbesondere ist in Fig.2A bis Fig.2C ein erstes Sensor-Feld 200, und in den Fig.2D bis Fig.2F ein zweites Sensor-Feld 201 gezeigt, wobei die unterschiedlichen Darstellungen des ersten Sensor-Feldes 200 in den Fig.2A bis Fig.2C drei unterschiedlichen Betriebszuständen entsprechen, analog entsprechen die Darstellungen in den Fig.2D bis Fig.2F drei unterschiedlichen Betriebszuständen des zweiten Sensor-Feldes 201.

Jedes der Sensor-Felder 200, 201 weist eine Sensor-Elektrode 202 auf, die in dem Chip 101 integriert ist. Auf der Sensor-Elektrode 202 des ersten Sensor-Felds 200 sind erste Fängermoleküle 203 immobilisiert, wobei die ersten Fängermoleküle 203 DNA-Halbstränge sind. Auf der Sensor-Elektrode 202 des zweiten Sensor-Feldes 201 sind zweite Fängermoleküle 204, die von den ersten Fängermolekülen 203 verschieden sind, immobilisiert.

Fig.2A, Fig.2D zeigen das erste Sensor-Feld 200 bzw. das zweite Sensor-Feld 201 in einem Betriebszustand, in dem die Sensor-Anordnung 100 von potentiellen Bindungspartnern (z.B. DNA-Halbsträngen) frei ist.

Zum Zwecke der.Diagnose, das heißt zum Untersuchen eines Analyten auf das Vorhandensein bestimmter DNA-Moleküle, wird ein Analyt 205 zunächst auf alle Sensor-Felder 102 der Sensor-Anordnung 100 und daher auch auf die Sensor-Felder 200, 201 gebracht, d.h. die gesamte Sensor-Anordnung 100 wird mit dem zu untersuchenden Analyt 205 geflutet. Dieser Betriebszustand des ersten Sensor-Feldes 200 ist in **Fig.2B** und des zweiten Sensor-Feldes 201 in **Fig.2E** gezeigt. Da die ersten Fängermoleküle 203 gemäß dem Schlüssel-Schloss-Prinzip mit in dem Analyten 205 vorhandenen (halbsträngigen) DNA-Molekülen, nämlich mit den zu erfassenden Partikeln 206, zusammenpassen, erfolgt eine Hybridisierung, d.h. eine Anbindung der jeweiligen DNA-Moleküle 206 an die komplementären ersten Fängermoleküle 203 des ersten Sensor-Feldes 200 (vgl. Fig.2B). Da die zweiten Fängermoleküle 204 aufgrund ihrer Basensequenz mit den zu erfassenden Partikeln 206 nicht zusammenpassen, (vgl. Fig.2E), erfolgt keine Hybridisierung.

Um die in **Fig.2C**, **Fig.2F** gezeigten Betriebszustände des ersten Sensor-Feldes 200 bzw. des zweiten Sensor-Feldes 201 zu erhalten, wird der Analyt 205 von der Sensor-Anordnung 100 entfernt. Ferner wird eine Spüllösung 207 auf die Sensor-Anordnung 100 aufgebracht. Dadurch verbleiben auf dem ersten Sensor-Feld 200 die mit den ersten Fängermolekülen 206 hybridisierten zu erfassenden Partikel 206, wohingegen auf dem zweiten Sensor-Feld 201 nur die zweiten Fängermoleküle 204, nicht aber zu erfassende Partikel 206 zurückbleiben.

Zum Nachweis der erfolgten Hybridisierung werden häufig optische Verfahren verwendet.

Bei einem optischen Verfahren wird an die in den Analyten vorhandenen DNA-Stränge eine Fluoreszenz-Markierung ("label") angebunden. Wird nun die gesamte Sensor-Anordnung 100 nach einem erfolgten Hybridisierungsvorgang und einem weiteren Spülschritt mit elektromagnetischer Strahlung (z.B. Licht) bestrahlt, kann aufgrund der Kenntnis der Lokalisierung der jeweiligen Fängermoleküle 203, 204 ermittelt werden, an welchen Sensor-Feldern eine Hybridisierung stattgefunden hat (erstes Sensor-Feld 200) und an welchen Sensor-Feldern nicht (zweites Sensor-Feld 201). Aufgrund der genauen Kenntnis der verwendeten Fängermoleküle 203, 204 kann auf das Vorhandensein bzw. Fehlen bestimmter zu erfassender Partikel in dem zu untersuchenden Analyt mit einer hohen Selektivität geschlossen werden. Die optischen Verfahren haben den Nachteil, dass ein aufwändiges und kostenintensives optisches System zum Auswerten erforderlich ist. Dies erschwert beispielsweise den Einsatz derartiger optischer Systeme in Arztpraxen oder gar in tragbaren Geräten.

Alternativ zu dem optischen Verfahren kann ein erfolgtes Hybridisierungsereignis unter Verwendung eines elektrischen Verfahrens detektiert werden.

Diesbezüglich ist zu unterscheiden zwischen Verfahren, die auf der Verwendung eines Enzymlabels beruhen (beispielsweise in [1], [2] beschrieben) und sogenannten "Label-freien" Verfahren, die beispielsweise in [3] bis [9] beschrieben sind. Label-freie Verfahren sind attraktiver, da ein aus biochemischer Sicht häufig aufwändiger Verfahrensschritt zum Versehen von Molekülen mit einem Label vermieden ist und daher ein Label-freies Verfahren einfacher in der Probenvorbereitung und somit billiger ist.

Allerdings ist das Betreiben eines elektronischen Biosensors schwierig zu realisieren, so dass insbesondere bei den elektronischen Label-freien Verfahren bislang Untersuchungen nur an Einzelsensoren oder an sehr kleinen Arrays aus einer Aneinanderreihung von Einzelsensoren durchgeführt wurden.

Im Weiteren werden aus dem Stand der Technik bekannte Label-freie Verfahren beschrieben.

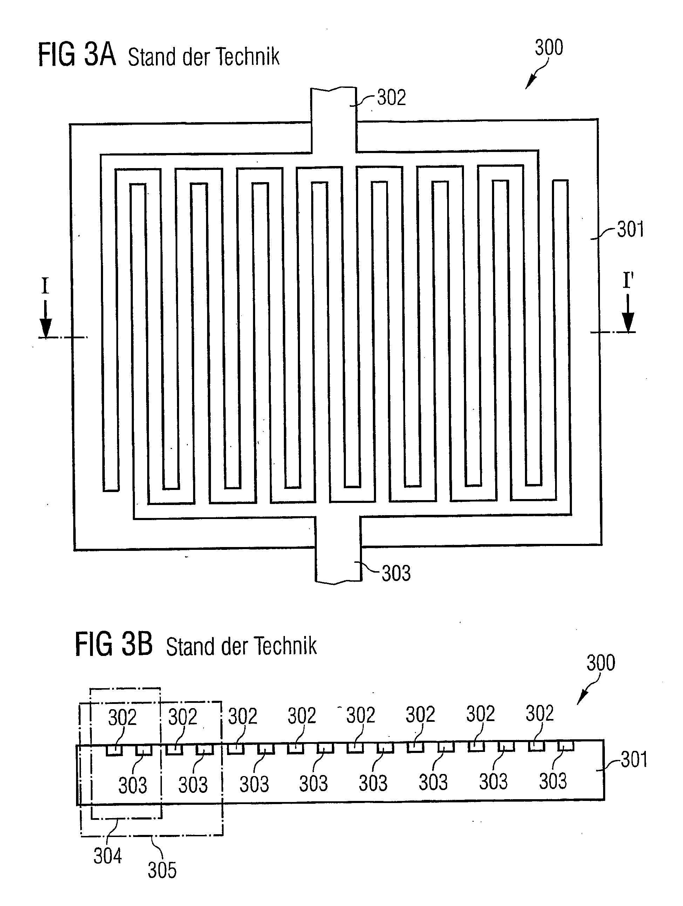

Ein erster Ansatz ist aus [3] bis [6] bekannt. Dieser Ansatz wird im Weiteren bezugnehmend auf Fig.3A bis Fig. 7B beschrieben.

In **Fig.3A**, **Fig.3B** ist eine Interdigitalelektroden-Anordnung 300 gezeigt, bei der in einem Substrat 301 eine erste Elektrodenstruktur 302 und eine zweite Elektrodenstruktur 303 aufgebracht sind, die anschaulich fingerförmig ineinander greifen. In Fig.3A ist eine Draufsicht der Interdigitalelektroden-Anordnung 300 gezeigt, in Fig.3B ist eine Querschnittsansicht entlang der in Fig.3A gezeigten Schnittlinie I-I' gezeigt. Die Interdigitalelektroden-Anordnung 300 enthält periodische, nebeneinander angeordnete Elektroden-Komponenten der Elektrodenstrukturen 302, 303.

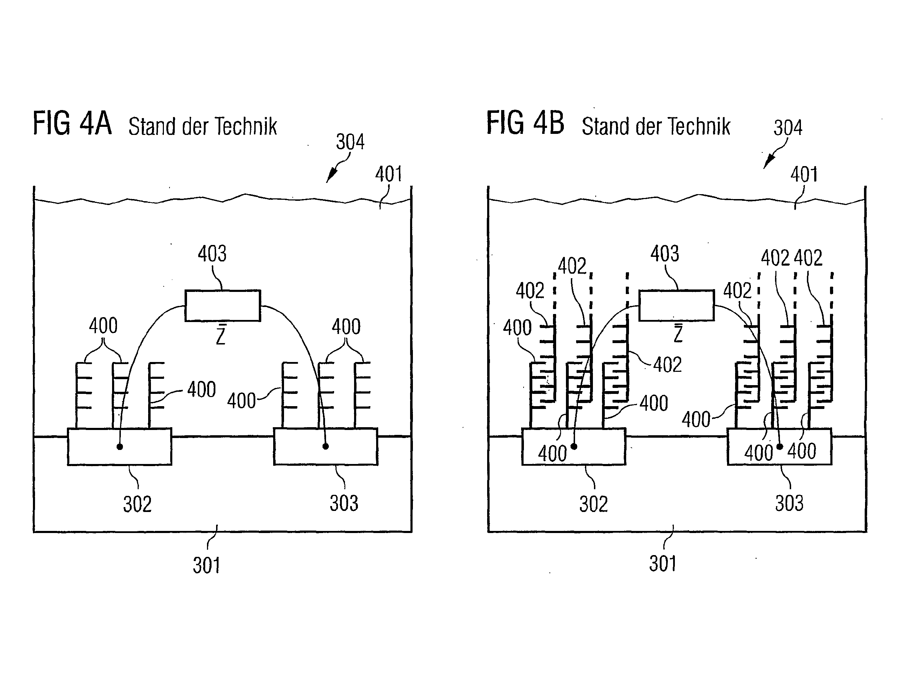

Zur Erklärung des Prinzips der Funktionsweise der Interdigitalelektroden-Anordnung 300 wird bezugnehmend auf **Fig.4A**, **Fig.4B** ein erster Teilbereich 304 der Interdigitalelektroden-Anordnung 300 beschrieben.

Der erste Teilbereich 304 ist in Fig.4A als Querschnittsansicht in einem ersten Betriebszustand gezeigt, in Fig.4B als Querschnittsansicht in einem zweiten Betriebszustand.

Auf den Elektrodenstrukturen 302, 303 sind jeweils Fängermoleküle 400 immobilisiert. Für die Elektrodenstrukturen 302, 303 wird vorzugsweise Gold-Material verwendet, so dass das Immobilisieren der Fängermoleküle 400 unter Verwendung der aus der Biochemie bekannten besonders vorteilhaften Gold-Schwefel-Kopplung realisiert wird, indem beilspielsweise eine Thiol-Endgruppe (SH-Gruppe) der Fängermoleküle 400 mit den Gold-Elektroden 302, 303 chemisch gekoppelt wird.

Oberhalb der Sensor-Elektroden 302, 303 befindet sich während des aktiven Sensorbetriebs ein zu untersuchender, elektrolytischer Analyt 401, der wiederum auf das Vorhandensein zu erfassender Partikel 402 (beispielsweise bestimmter DNA-Moleküle) untersucht werden soll. Eine Hybridisierung, das heißt eine Anbindung von DNA-Strängen 402 an die Fängermoleküle 400 erfolgt nur dann, wenn die Fängermoleküle 400 und die DNA-Stränge 402 gemäß dem Schlüssel-Schloss-Prinzip zueinander passen (vgl. Fig.4B). Ist dies nicht der Fall, so erfolgt keine Hybridisierung. Die Spezifität des Sensors leitet sich also aus der Spezifität der Fängermoleküle 400 ab.

Der elektrische Parameter, der bei dieser Messung ausgewertet wird, ist der komplexe elektrische Widerstand, also die Impedanz 403 zwischen den Elektroden 302, 303, die in Fig.4A, Fig.4B schematisch dargestellt ist. Infolge einer erfolgten Hybridisierung verändert sich der Wert der Impedanz, da die zu erfassenden DNA-Partikel 402 und die Fängermoleküle 400 aus einem Material bestehen, das von dem Material des Elektrolyten abweichende elektrische Eigenschaften aufweist und nach der Hybridisierung der Elektrolyt anschaulich aus dem die Elektroden 302, 303 umgebenden Volumen verdrängt wird.

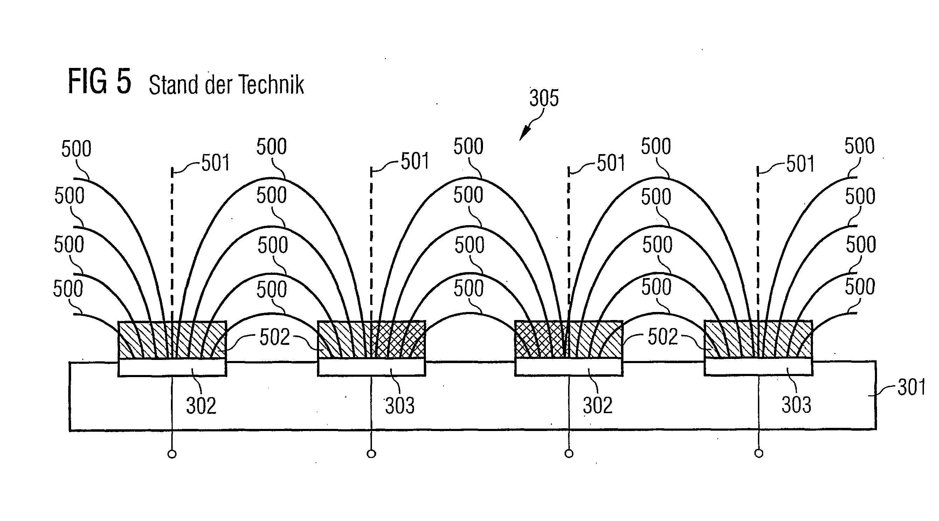

In **Fig.5** ist ein zweiter Teilbereich 305 der Interdigitalelektroden-Anordnung 300 in einer Querschnittsansicht gezeigt. Der zweite Teilbereich 305 repräsentiert einen größeren Teilbereich der Interdigitalelektroden-Anordnung 300 als der in Fig.4A, Fig.4B dargestellte erste Teilbereich 304. In Fig.5 ist schematisch der Verlauf der elektrischen Feldlinien 500 zwischen jeweils benachbarten Elektrodenstrukturen 302, 303 gezeigt. Wie in Fig.5 ferner gezeigt, sind die Feldverläufe innerhalb eines jeweiligen durch zwei Symmetrielinien 501 gedachten Bereichs periodisch, so dass die in Fig. 4A, Fig.4B gezeigte Betrachtung zweier unmittelbar benachbarter Elektrodenstrukturen 302, 303 ausreichend ist. Ferner ist in Fig.5 für jede der Elektrodenstrukturen 302, 303 schematisch ein Bedeckungsbereich 502 gezeigt, der die auf den Elektrodenstrukturen 301, 302 immobilisierten Fängermoleküle und möglicherweise mit diesen hybridisierte zu erfassende Partikel darstellt. Anschaulich ist aus der in Fig.5 gezeigten Darstellung verständlich, dass der Verlauf der Feldlinien 500 aufgrund eines Hybridisierungs-Ereignisses signifikant beeinflusst wird, da die physikalisch-chemischen Eigenschaften insbesondere des Bedeckungsbereichs 502 verändert werden.

Es ist ferner anzumerken, dass ergänzend oder alternativ in Bereichen zwischen Elektroden 302, 303 Fängermoleküle vorgesehen sein können. Bei Hybridisierungsereignissen zwischen in Bereichen zwischen den Elektroden angebrachten Fängermolekülen und zu erfassenden Partikeln verändern sich wiederum die elektrischen Eigenschaften der Elektroden bzw. des Elektrodenbereichs.

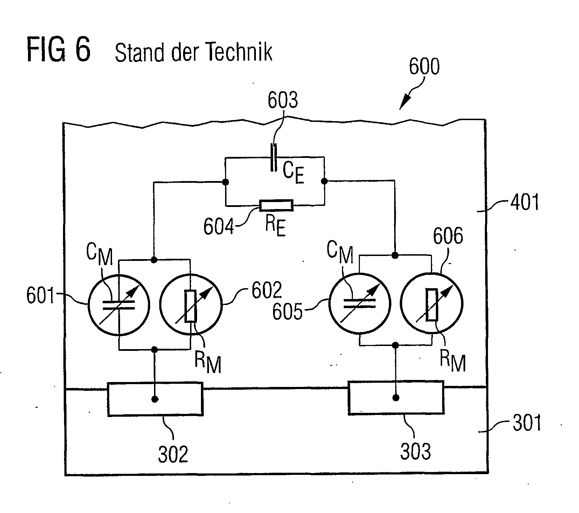

In **Fig.6** ist schematisch ein vereinfachtes Ersatzschaltbild 600 des in Fig.4A gezeigten ersten Teilbereichs 304 der Interdigitalelektroden-Anordnung 300 gezeigt.

Das Ersatzschaltbild 600 zeigt eine variable erste Kapazität 601 $C_M$, deren Wert von dem Maß einer an der Elektrodenstruktur 302 erfolgten Hybridisierung abhängig ist. Zu dieser ist ein variabler erster ohmscher Widerstand 602 $R_M$ parallel geschaltet. Anschaulich repräsentieren die Komponenten 601, 602 die elektrischen Eigenschaften des Umgebungsbereichs der ersten Elektrodenstruktur 302. Ferner ist eine variable zweite Kapazität 603 $C_E$ und ein dazu parallel geschalteter variabler zweiter ohmscher Widerstand 604 $R_E$ gezeigt, welche die elektrischen Eigenschaften des Analyten 401 repräsentieren. Darüber hinaus ist eine die elektrischen Eigenschaften des Umgebungsbereichs der zweiten Elektrodenstruktur 303 repräsentierende, variable dritte Kapazität 605 $C_M$ und ein zu dieser parallel geschalteter variabler dritter ohmscher Widerstand 606 $R_M$ gezeigt. Wie ferner in Fig.6 gezeigt, ist die Parallelschaltung aus Komponenten 601, 602, die Parallelschaltung aus Komponenten 603, 604 und die Parallelschaltung aus Komponenten 605, 606 seriell geschaltet. Die Komponenten 601, 602, 605 und 606 sind variabel dargestellt, um zu verdeutlichen, dass infolge eines Sensorereignisses sich deren Werte verändern.

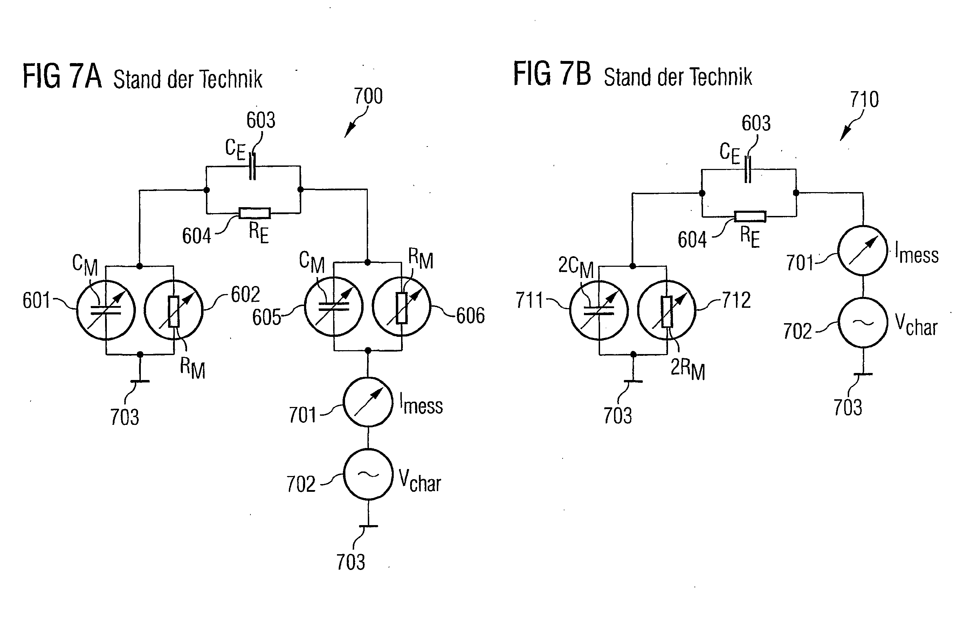

Um den Wert der Impedanz zu ermitteln, wird in einem Messverfahren an eine der Elektroden 302, 303 eine Wechselspannung $V_{char}$ angelegt, wie in dem in **Fig.7A** gezeigten Ersatzschaltbild 700 des ersten Teilbereichs 304 gezeigt. Die Wechselspannung $V_{char}$ wird unter Verwendung einer Wechselspannungsquelle 702 bereitgestellt. Der durch die Anordnung fließende Strom $I_{mess}$ wird unter Verwendung des Amperemeters 701 erfasst. Die Komponenten 701, 702 sind zueinander seriell geschaltet und sind zwischen der Parallelschaltung aus Komponenten 605, 606 und dem elektrischen Massepotential 703 geschaltet. Das an den Elektroden 302, 303 resultierende Wechselstromsignal $I_{mess}$ wird gemeinsam mit der angelegten Wechselspannung $V_{char}$ ausgewertet, um die Impedanz zu ermitteln. Alternativ kann in einem anderen Messverfahren auch an beide Elektroden 302, 303 jeweils ein Signal, das heißt eine elektrische Spannung, angelegt werden, die Signale sind dann gegenphasig.

Die in **Fig.7B** gezeigte Version eines vereinfachten Ersatzschaltbildes 710 unterscheidet sich von dem in Fig.7A gezeigten Ersatzschaltbild 700 darin, dass die Elemente $C_M$ 601, 605 bzw. $R_M$ 602, 606 zu einer ersten effektiven Kapazität 711 bzw. zu einem ersten effektiven ohmschen Widerstand 712 zusammengefasst sind.

Der Abstand der Elektroden 302, 303 zueinander sowie die Breite der Elektroden liegt typischerweise im Sub-$\mu$m-Bereich. Gemäß der Interdigitalelektroden-Anordnung 300 sind eine Vielzahl von Elektrodenkomponenten (anschaulich Finger) der Elektrodenstrukturen 302 bzw. 303 parallel zueinander angeordnet. In [3] bis [6] werden aus Gründen der Oberflächenfunktionalisierung kreisförmige Anordnungen verwendet. Die äußeren Abmessungen bzw. der Durchmesser solcher Einzelsensoren liegt typischerweise im Bereich von ungefähr 100 $\mu$m bis mehreren 100 $\mu$m.

Bezüglich der anregenden Wechselspannung $V_{char}$ ist zu beachten, dass deren effektiver Mittelwert bzw. deren Scheitelwert einen bestimmten Maximalwert nicht überschreiten soll. Bei Überschreitung eines solchen Maximalwerts werden die bio- bzw. elektrochemischen Rahmenbedingungen verletzt, die den Betrieb solcher Sensoren ermöglichen. Überschreitet das Elektroden-Potential (das auf das elektrische Potential des Elektrolyten bezogen ist) einen oberen Schwellwert, so können bestimmte Stoffe in einem Umgebungsbereich einer Elektrode oxidiert werden. Unterschreitet das elektrische Potential (das auf das elektrische Potential des Elektrolyten bezogen ist) einen unteren Schwellwert, werden dort Stoffe reduziert. Eine unerwünschte Oxidation oder Reduktion kann unter anderem dazu führen, dass die chemischen Bindungen, die bei der Immobilisierung und Hybridisierung eingegangen werden, aufgebrochen werden. Ferner kann Elektrolyse an den Sensor-Elektroden einsetzen, so dass die Elektrolyseprodukte das für den Betrieb der Sensoren erforderliche chemische Milieu aus dem erforderlichen Gleichgewicht bringen bzw. zu Gasbildung führen. Die Absolutwerte der kritischen Potentiale hängen von der Zusammensetzung und dem Konzentrationsverhältnis und der chemischen Umgebung der Elektroden ab (beispielsweise eine Immobilisierungsschicht, ein Analyt, etc.).

Typische Werte für die anregende Spannung liegen im Bereich einiger 10mV bis maximal um 100mV. Dies ist eine wichtige Rahmenbedingung für den Betrieb solcher Sensoren, da das resultierende Messsignal (Stromstärke $I_{mess}$) hinsichtlich seiner Größe näherungsweise direkt proportional der angelegten Spannung ist.

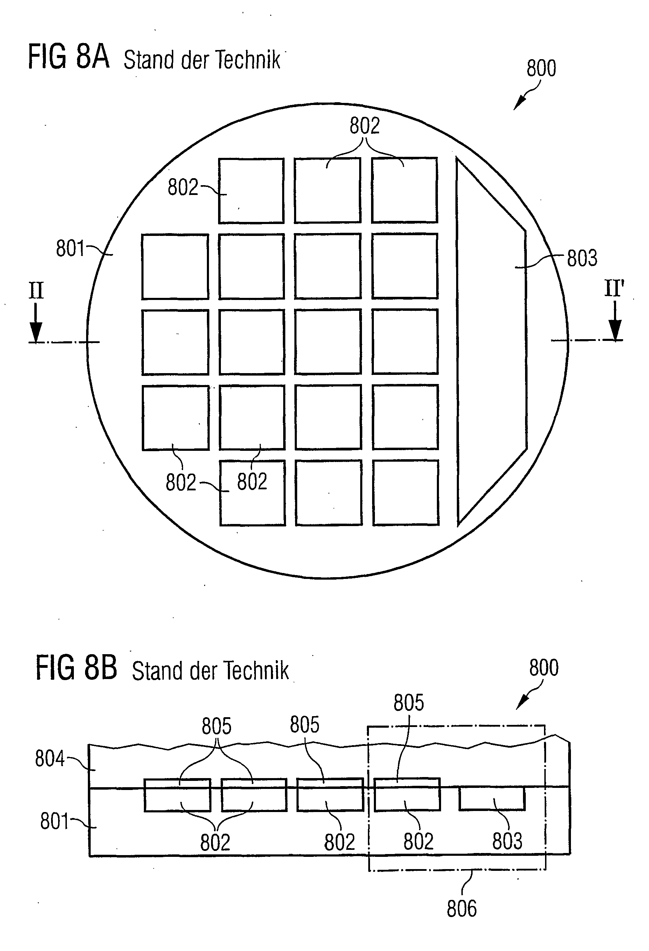

Im Weiteren wird bezugnehmend auf Fig.8 bis Fig.10 ein zweites Prinzip eines labelfreien elektrischen Sensors beschrieben, wie es aus [7] bis [9] bekannt ist.

Gemäß diesem zweiten Ansatz wird jeweils eine flächige Elektrode für den Nachweis einer Spezies verwendet, das heißt für die Immobilisierung von Fängermolekülen und zum Hybridisieren mit zu erfassenden Partikeln. Ferner wird ein Wechselspannungssignal direkt an einen elektrisch leitfähigen Analyten angelegt. Bei diesen Verfahren erfolgt das Anlegen der Wechselspannung und das gegebenenfalls erforderliche zusätzliche Anlegen eines Gleichstrom-Offsets unter Verwendung einer sogenannten Gegen- oder Referenzelektrode, welche eine niederohmige, unter wechselnden elektrochemischen Bedingungen stets definierte, in ihren elektrischen Eigenschaften konstante elektrische Kopplung mit dem Elektrolyten bewerkstelligt. Eine solche Referenzelektrode ist üblicherweise aus einem anderen Material (beispielsweise Silber/Silberchlorid) hergestellt als die Elektroden, die zum Immobilisieren der Fängermoleküle genutzt werden und daher häufig aus Gold-Material hergestellt sind. Die Verwendung unterschiedlicher Materialien resultiert aus den unterschiedlichen elektrochemischen Anforderungen an die beiden Elektroden-Materialien.

In **Fig.8A**, **Fig.8B** ist eine Sensor-Anordnung 800 gemäß diesem zweiten Ansatz gezeigt. Fig.8A zeigt eine Draufsicht der Sensor-Anordnung 800, in Fig.8B ist eine Querschnittsansicht entlang einer Schnittlinie II-II' aus Fig.8A gezeigt.

Wie in Fig.8A gezeigt, sind auf einem Silizium-Substrat 801 eine Mehrzahl von Sensor-Feldern 802 und eine gemeinsame Referenzelektrode 803 angeordnet. Auf der Oberfläche jedes Sensor-Feldes 802 ist ein aktiver Bereich 805 vorgesehen, auf dem Fängermoleküle immobilisiert sind, zum Hybridisieren mit zu erfassenden komplementären Partikeln. In die Sensor-Anordnung 800 ist ein Analyt 804 eingefüllt. Bei der Sensor-Anordnung 800 ist ein Silizium-Substrat 801 verwendet, allerdings sind die elektrischen Eigenschaften des Siliziums nicht ausgenützt, um eine leistungsfähige integrierte Elektronik darin auszubilden.

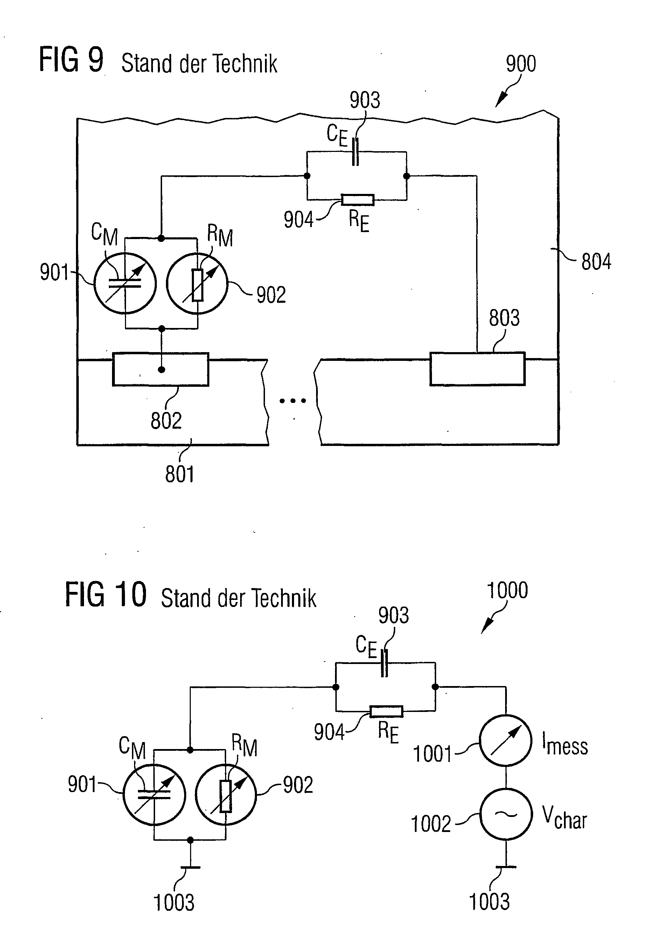

In **Fig.9** ist ein Ersatzschaltbild 900 eines Teilbereichs 806 der Sensor-Anordnung 800 gezeigt. Dieses zeigt eine variable erste Kapazität 901 $C_M$, welche die Kapazität des Umgebungsbereichs des Sensor-Feldes 802 darstellt. Ferner ist ein zu dieser parallel geschalteter variabler erster ohmscher Widerstand 902 $R_M$ gezeigt, der den ohmschen Widerstand des Umgebungsbereichs des Sensor-Feldes 802 darstellt. Eine variable zweite Kapazität 903 $C_E$ und ein zu dieser parallel geschalteter variabler zweiter ohmscher Widerstand $R_E$ 904 repräsentieren die elektrischen Eigenschaften des Analyten 804.

Ferner ist in **Fig.10** ein weiteres Ersatzschaltbild 1000 des Teilbereichs 806 der Sensor-Anordnung 800 gezeigt. Diese zeigt zusätzlich zu den in Fig.9 gezeigten Komponenten eine Wechselspannungsquelle 1002, mittels der eine Wechselspannung anlegbar ist, und zeigt ein Amperemeter 1001 zum Erfassen eines Messstroms $I_{mess}$. Die parallel geschalteten Komponenten 1001, 1002 sind zwischen das elektrische Massepotential 1003 und die Parallelschaltung aus Komponenten 903, 904 geschaltet.

In der Biochemie stehen häufig nur sehr geringe Probenvolumina zur Verfügung. In diesem Fall ist die Verwendung der Sensor-Anordnung 800 nachteilhaft, da die Gegenelektrode 803 nur sehr aufwändig oder gar nicht in miniaturisierter Form bereitgestellt werden kann. Sie wird häufig durch ein chloriertes Silberröhrchen realisiert.

Bei den beschriebenen, aus dem Stand der Technik bekannten Sensor-Anordnungen tritt beim Betrieb bzw. der Auswertung von Messsignalen das Problem auf, dass die Impedanz zwischen den Elektroden nicht ausschließlich kapazitive Anteile aufweist, sondern eine relativ komplexe, zusammengesetzte Größe ist. Eine wesentliche Ursache dafür liegt darin begründet, dass an der Messelektrode, die in direktem elektrischem (galvanischem) Kontakt zum Elektrolyten steht, stets ein elektrochemischer Umsatz stattfindet, der nur genau dann im Gleichgewicht ist, wenn sich das elektrische Potential der Elektrode gegenüber dem Elektrolyten frei einstellen kann. Jede Auslenkung dieses elektrischen Potentials hat automatisch einen Nettoumsatz an Material an den Elektroden zur Folge, der messtechnisch als näherungsweise ohmsche Leitfähigkeit in Erscheinung tritt. Das Immobilisieren von Fängermolekülen beeinflusst grundsätzlich den Material-Umsatz an der Elektrodenoberfläche, da dadurch die Elektrode teilweise bedeckt wird, und aufgrund von spezifischen elektrischen Eigenschaften der Moleküle (beispielsweise aufgrund der Tatsache, dass DNA-Moleküle häufig als Polyanionen vorliegen). Dies erschwert die messtechnische Auswertung der erfassten Sensorsignale. Deshalb wird versucht, die Messung derart zu gestalten, dass nur der in den angegebenen Ersatzschaltbildern von der Hybridisierung abhängige Wert der Elektrodenkapazität $C_E$ ermittelt wird. Alternativ können Betrag und Phase der Impedanz als Funktion der anregenden Frequenz gemessen werden, so dass im Idealfall alle Parameter aus dem resultierenden Bode-Diagramm ermittelt werden können. Diese Vorgehensweise ist allerdings sehr aufwändig.

Eine Möglichkeit, verbessert auswertbare Signale zu erhalten, besteht in der Verwendung eines sogenannten Lock-in-Verstärkers zum Erfassen des Sensorsignals. Dieses Prinzip wird im Weiteren anhand der in Fig.9, Fig.10 gezeigten Ersatzschaltbilder 900, 1000 erläutert.

Mit Hilfe einer Lock-in-Messeinrichtung wird eine Wechselspannung $V_{char}$ mit einer Frequenz f über die Gegenelektrode 803, welche eine niederohmige Verbindung zum Elektrolyten 804 gewährleistet, an den Elektrolyten 804 angelegt. Dann können der Imaginärteil und der Realteil des sich aus den Elementen $C_M$, $R_M$, $C_E$ und $R_E$ ergebenden komplexen Gesamtstroms $I_{mess}$ gemessen werden.

Unter der Annahme, dass der Betrag des komplexen Widerstandsanteils des Elektrolyten 804, nämlich $1/(2\pi f C_E)$, wesentlich größer ist als der Betrag des rein ohmschen Anteils $R_E$, ergibt sich der gemessene Strom zu:

$$I_{mess} = V_{char} \times \cfrac{1}{R_E + \cfrac{R_M \times \cfrac{1}{j2\pi f C_M}}{R_M + \cfrac{1}{j2\pi f C_M}}} . \qquad (1)$$

Der Imaginärteil des Stroms beträgt:

$$Im(I_{mess}) = V_{char} \times \frac{2\pi\ fC_M}{\left(\frac{R_E}{R_M} + 1\right)^2 + 4\pi^2\ f^2 C_M^2 R_E^2} . \qquad (2)$$

Unter der weiteren Annahme, dass der ohmsche Widerstand des Elektrolyten $R_E$ wesentlich geringer ist als der parasitäre Sensorparallelwiderstand $R_M$, das heißt wenn $R_M \gg R_E$ gilt, und unter der Annahme, dass die Frequenz f hinreichend gering gewählt wird, so dass

$$4\pi^2\ f^2 C_M^2 R_E^2 \ll 1 \qquad (3)$$

erfüllt ist, so kann für Gleichung (2) näherungsweise die einfache Beziehung

$$Im(I_{mess}) = V_{char} \times 2\pi\ fC_M \qquad (4)$$

angegeben werden. Gleichung (4) besagt anschaulich, dass der mittels des Lock-in-Verfahrens bestimmte Imaginärteil des Stroms linear von der Sensorkapazität $C_M$ abhängt.

Nur unter diesen Bedingungen beinhaltet die genaue Änderung von $C_M$ die gesuchte Information.

Die Notwendigkeit, Gleichung (3) ausreichend gut zu erfüllen, begrenzt die Wahl der Messfrequenz nach oben. Allerdings ist die freie Wahl einer nicht allzu niedrigen Frequenz wünschenswert, da gemäß Gleichung (4) die Größe des auszuwertenden Messsignals proportional mit der Frequenz ansteigt. Um auch bei den niedrigen Frequenzen und den Vorgaben für die Größenordnung der Spannung $V_{char}$ ein gut auswertbares Signal gemäß Gleichung (4) zu erhalten, müssen entweder großflächige Sensoren, die zu großen Werte für die Sensorkapazität $C_M$ führen, oder hochempfindliche Verstärker verwendet werden, was aufwändig ist.

Das Verwenden eines Lock-in-Verstärkers weist trotz der verbesserten Nachweisempfindlichkeit einen erheblichen Nachteil auf. Für das Ansteuern und Auswerten werden komplexe Schaltungsanordnungen benötigt, welche trotz einer Verkleinerung der Sensor-Anordnung gegenüber den aus dem Stand der Technik bekannten Anordnungen, einen erheblichen Platzbedarf benötigen, so dass resultierend nur eine begrenzte Anzahl dieser Sensor-Anordnungen auf der Chipfläche matrixförmig angeordnet werden können.

In [10] ist ein Verfahren zum Detektieren eines Analyten offenbart, wobei ein integriertes System bereitgestellt ist, das eine Sensoranordnung aufweist, die eine Mehrzahl von verschiedenen Sensoren aufweist, wobei jeder Sensor eine Matrix aus abwechselnd leitenden und nichtleitenden Bereichen aufweist. Bei Anwesenheit des Analyten ändert sich der elektrische Widerstand der Sensor-Anordnung. Diese zeitliche Änderung des elektrischen Widerstands wird gemessen und mit gespeicherten Daten verglichen, wobei die dafür notwendige Speichereinheit und die Verarbeitungseinheit im Substrat der Sensoranordnung integriert sind. Der zeitliche Verlauf der Messkurve der Widerstandswerte ist von der Permeation der Sensoranordnung durch den Analyten abhängig. Diese spezifische Eigenschaft des Analyten wird zur Detektion genutzt.

Aus [11] sind ein Feuchtigkeitsfühler mit einem kapazitiven Feuchte-Messelement sowie ein Verfahren zum Erfassen der Luftfeuchtigkeit bekannt.

Weiterhin ist in [12] eine Biosensor-Anordnung unter Verwendung eines Lock-in-Verstärkers beschrieben.

[13] beschreibt einen Sensor zum Erfassen des Abstands zwischen einem Metallobjekt und einem Kondensatorelektrode.

Der Erfindung liegt das Problem zugrunde, eine Biosensor-Anordnung gemäß dem Impedanz-Verfahren mit einer einfachen Sensorereignis-Erkennung bereitzustellen.

Das Problem wird durch eine Biosensor-Anordnung und ein Verfahren für das Ermitteln eines Sensorereignisses mit den Merkmalen gemäß den unabhängigen Patentansprüchen gelöst. Bevorzugte Ausgestaltungen der Erfindung ergeben sich aus den abhängigen Ansprüchen.

Eine Biosensor-Anordnung weist ein Biosensorelement mit mindestens zwei Elektroden auf, wobei die Elektroden bevorzugt eine kammförmige Struktur aufweisen. Ferner weist die Biosensor-Anordnung einen Ansteuerschaltkreis auf, welcher derart eingerichtet ist, dass ein vorgegebener Strom bereitgestellt wird, und dass die mindestens zwei Elektroden mit dem vorgegebenen Strom aufgeladen und/oder entladen werden.

In einer alternativen Ausgestaltung der Erfindung ist es vorgesehen, dass zwei Elektroden, die auf dem gleichen elektrischen Potential liegen, kammförmig ineinander greifend angeordnet sind und dass eine dritte Elektrode, die auf einem anderen elektrischen Potential liegt, mäanderförmig zwischen den beiden Elektroden mit gleichem elektrischem Potential angeordnet ist.

Das Sensorelement ist derart eingerichtet, dass eine in ihrem Verlauf von einem Sensorereignis abhängige elektrische Spannung an den mindestens zwei Elektroden bereitgestellt wird.

Die Biosensor-Anordnung ist derart eingerichtet, dass eine für das Aufladen und/oder Entladen der Elektroden von einer negativen auf eine positive bzw. von der positiven auf die negative Referenzspannung benötigte Zeitdauer ermittelt wird.

Gemäß der Erfindung weist die Sensor-Anordnung eine Vergleichereinheit auf, wobei die Vergleichereinheit derart eingerichtet ist, dass die von der Elektrode bereitgestellte elektrische Spannung, welche mit einem Aufladevorgang und/oder Entlade-Vorgang korrespondiert und einen von einem Sensorereignis abhängigen zeitlichen Spannungsverlauf aufweist, mit einer vorgegebenen Referenzspannung verglichen wird. Die Vergleichereinheit weist vorzugsweise einen Komparator auf. Ferner ist eine mit der Vergleichereinheit gekoppelte Spannungsquelle vorgesehen, welche eine Referenzspannung bereitstellt. Ferner ist die Vergleichereinheit derart eingerichtet, dass der Komparator die Potentialdifferenz zwischen der Referenzspannung und der von dem Sensorelement während des Aufladevorgangs und/oder Entlade-Vorgangs der Elektroden, vorzugsweise kontinuierlich, vergleicht.

Anschaulich wird abhängig von dem vorgegebenen elektrischen Strom und einer für das Aufladen und/oder Entladen der mindestens zwei Elektroden benötigten Zeitdauer, der Wert der Kapazität ermittelt, wobei die Zeitdauer für das Aufladen und/oder Entladen von einem Sensorereignis abhängt.

Ferner ist ein Verfahren zum Ermitteln eines Sensorereignisses an einem Biosensorelement bereitgestellt. Gemäß dem Verfahren werden mindestens zwei Elektroden mit einem vorgegebenen Strom aufgeladen und/oder entladen. Gemäß dem Verfahren der vorliegenden Erfindung wird die für das Aufladen und/oder Entladen der Elektroden des Biosensorelements von einer negativen Referenzspannung auf eine positive Referenzspannung bzw. von der positiven Referenzspannung auf die negative Referenzspannung benötigte Zeitdauer ermittelt, wobei die Zeitdauer für das Aufladen und/oder Entladen von einem Sensorereignis abhängt. Ferner wird gemäß dem Verfahren unter der Verwendung der Zeitdauer ermittelt, ob ein Sensorereignis stattgefunden hat oder nicht oder in welchem Umfang ein Sensorereignis an dem Biosensorelement stattgefunden hat. Gemäß dem Verfahren werden die Elektroden wiederholt von der negativen Referenzspannung auf die positive Referenzspannung aufgeladen und/oder von der positiven Referenzspannung auf die negative Referenzspannung entladen.

Anschaulich ist erfindungsgemäß ein Multi-Analysesystem zur qualitativen und quantitativen Auswertung der Analyse von makromolekularen Biomolekülen, z.B. Proteinen, und insbesondere von DNA-Halbsträngen, geschaffen. Durch die Vereinfachung der Schaltelektronik ist es möglich, die Sensor-Anordnung in einem Array mittels CMOS-Technologie zu integrieren, wodurch die Nachweisempfindlichkeit durch das Minimieren parasitärer Spannungen und Ströme verbessert wird.

Eine Grundidee der Erfindung ist darin zu sehen, dass eine Sensor-Anordnung mit einer Vielzahl von Sensor-Elektroden auf einem Substrat bereitgestellt wird. Vor und nach einem Sensorereignis, beispielsweise einer Hybridisierung zwischen Fängermolekülen und in einem Analyten befindlicher DNA-Halbstränge, wird entgegen dem Stand der Technik in [3] und [9] einer ausgewählten Elektrode ein vorgegebener, vorzugsweise konstanter, elektrischer Strom zugeführt oder abgeführt, womit die ausgewählte Elektrode aufgeladen bzw. entladen wird. Für den Auflade-Vorgang wird eine Schaltereinheit in eine erste Schalterstellung gebracht, wodurch ein Strom in positiver Flussrichtung durch die Elektrode fließt. Anschließend an den Auflade-Vorgang, wird durch eine zweite Schalterstellung, wobei dadurch ein Strom in negativer Flussrichtung durch die Elektrode fließt, die mindestens eine Elektrode unabhängig davon, ob ein Sensorereignis stattgefunden hat oder nicht entladen. Gemäß der Erfindung werden dafür die Stromflussrichtung sowie die Richtung des Referenzpotentials mittels einer Schaltereinheit invertiert, wobei der Schalterzustand der Schaltereinheit mittels einer Steuereinheit umgeschaltet wird. Die für das Umschalten der Schaltereinheit notwendigen Signale werden von einer Steuereinheit erzeugt. Folglich fließt jetzt ein Strom in negativer Richtung durch die ausgewählte Elektrode und es liegt ebenfalls ein negatives Potential an der ausgewählten Elektrode an.

Infolge eines Sensorereignisses ändert sich entsprechend einem Hybridisierungsereignis der Wert der Impedanz, insbesondere der Wert der Kapazität zwischen der ausgewählten Elektrode des Sensorelementes und zumindest einem Teil der anderen Elektrode des Sensorelementes. Erfindungsgemäß wird anhand der für das Aufladen und/oder Entladen der mindestens einen Elektrode benötigte Zeitdauer ermittelt, ob ein Sensorereignis beispielsweise in Form eines Hybridisierungs-Ereignisses, allgemein eines Komplexbildungsereignisses, oder ein sonstiges Sensorereignis, beispielsweise in Form einer direkten Leitfähigkeitsänderung als Folge des Stoffwechsels von auf den Elektroden immobilisierten Zellen, aufgetreten ist.

Anschaulich wird vorgeschlagen, eine Array-Konfiguration mit einer Vielzahl von Sensor-Elektroden zu verwenden. Auf den Elektroden und/oder zwischen den Elektroden werden Fängermoleküle, beispielsweise unter Verwendung von Mikrodispensiertechniken, in an sich bekannter Weise aufgebracht und immobilisiert, das heißt mit der Sensoroberfläche verbunden. Das Verwenden einer Referenzelektrode, wie oben Bezug nehmend auf Fig.8A bis Fig.10 beschrieben, ist erfindungsgemäß vermieden. Folglich entfällt auch die Notwendigkeit eines speziellen, problematischen Elektrodenmaterials für eine solche Referenzelektrode.

Anschaulich sind erfindungsgemäß eine neuartige Sensor-Architektur, eine neue Ansteuerung und eine neue Möglichkeit zum Auswerten der Sensor-Elektroden geschaffen.

Das Realisieren solcher Arrays auf einem Halbleiterchip als Substrat bietet den Vorteil, dass eine Sensor-Anordnung mit einer wesentlich höheren Anzahl einzelner Sensor-Elektroden bei verringerter Fläche realisierbar ist. Dies führt zum einen zu einer wesentlich höheren Anzahl von Tests, die mit einer solchen Sensor-Anordnung zeitlich parallel durchführbar sind, zum anderen zu einer wesentlich höheren Anzahl von Parametern, die gleichzeitig charakterisiert werden können. Ferner kann das Volumen von chemischen Reagenzien, die für den Betrieb von solchen Sensor-Anordnungen benötigt werden, verringert werden.

Ein weiterer Vorteil besteht darin, dass eine wesentlich kleinere Fläche für die Sensor-Elektroden verwendet werden kann verglichen mit den Elektrödenkonfigurationen gemäß dem Stand der Technik. Die durch die geringere Sensorfläche der einzelnen Sensoren bedingte geringere Signalamplitude auf aktiven Halbleiterchips, d.h. Halbleiterchips mit im Substrat integrierter Ansteuer- und Auswerteelektronik, ist kein Nachteil gegenüber einer passiven Realisierung, d.h. Sensorchips mit einer externen Ansteuer- und Auswerteelektronik, da bei einer monolithisch integrierten Sensor-Anordnung dieses Signal "On-Chip" mit Hilfe von Schaltungen verstärkt werden kann, die zum Beispiel unterhalb der Sensor-Elektroden in dem Substrat integriert sind. Somit sind solche Chips in der Lage, ein besseres Signal-Rauschverhältnis der auszuwertenden Sensorsignale zu liefern. Insbesondere ist die Toleranz solcher Chips gegenüber von außen eingekoppelten Störsignalen wesentlich größer als im Falle der Verwendung passiver elektrischer Sensor-Arrays, bei denen vergleichsweise lange elektrische Leitungen mit dem Mess-Equipment gekoppelt werden müssen. Auf diesen Leitungen geführte Signale sind aufgrund ihrer geringen Amplitude empfindlich gegenüber Störungen, die in die Leitungen einkoppeln. Ferner ist die parasitäre Kapazität der Leitungen groß im Vergleich zur Sensorkapazität kleiner Sensorstrukturen, so dass die Detektionsempfindlichkeit reduziert ist.

Ein weiterer Vorteil, insbesondere im Vergleich zu der Bezug nehmend auf Fig.8 bis Fig.10 beschriebenen Referenzelektroden-Anordnung ist, dass die technologischen Anforderungen an die einzusetzenden Materialien weitaus geringer sind. Insbesondere wird die Notwendigkeit des Bereitstellens einer Referenzelektrode, die häufig als Silber/ Silberchlorid-Elektrode realisiert ist, zur Herstellung eines elektrochemischen Referenzpotentials bezüglich der Elektroden vermieden.

Die Sensor-Anordnung kann derart eingerichtet sein, dass für zumindest einen Teil der Sensor-Elektroden sequentiell jeweils für eine ausgewählte Sensor-Elektrode ermittelt wird, ob an der jeweils ausgewählten Sensor-Elektrode ein Hybridisierungsereignis erfolgt ist oder nicht. Mit anderen Worten können mehrere Sensor-Elektroden nacheinander ausgewählt werden, um zu ermitteln, ob an diesen Sensor-Elektroden ein Sensorereignis stattgefunden hat oder nicht, wobei in jeder Sensor-Anordnung eine unterschiedliche Analyse durchgeführt werden kann.

Die Erfindung zeichnet sich insbesondere dadurch aus, dass auf einen Lock-in-Verstärker verzichtet werden kann, und dadurch gemäß der Erfindung jedes Sensorelement selektiv ansteuerbar und auswertbar ist. Ein weiterer Vorteil der vorliegenden Erfindung ist die sehr einfache und Platz sparende jeweilige Schaltstruktur des Ansteuerschaltkreises, der Vergleichereinheit und des Auswerteschaltkreises. Dies ermöglicht das Integrieren der Sensor-Anordnung in ein Substrat mit CMOS-Technologie.

Im Weiteren wird eine erfindungsgemäße Sensor-Anordnung gemäß einer weiteren bevorzugten Ausführungsform der Erfindung beschrieben. Die Ausgestaltungen der Sensor-Anordnung gemäß einer ersten bevorzugten Ausführungsform der Erfindung gelten auch für die Sensor-Anordnung gemäß der zweiten bevorzugten Ausführungsform der Erfindung.

Gemäß der zweiten bevorzugten Ausführungsform der Erfindung ist eine Sensor-Anordnung mit mindestens einer auf einem Substrat bereit gestellten Elektrode des Sensorelementes geschaffen. Auf der mindestens einen Elektrode sind Fängermoleküle immobilisiert, die derart eingerichtet sind, dass zu erfassende Partikel mit ihnen hybridisieren können.

Erfindungsgemäß weist das Sensor-Element der zweiten bevorzugten Ausführungsform der Erfindung ebenfalls eine kammförmige Struktur auf.

Erfindungsgemäß weist der Ansteuerschaltkreis gemäß der zweiten bevorzugten Ausführungsform der Erfindung eine erste Stromquelle und eine zweite Stromquelle für das Aufladen und/oder Entladen der mindestens einen Elektrode auf, wobei mittels des Umschaltens des Schalterzustands der ersten Schaltereinheit zwischen einem Aufladevorgang und/oder einem Entlade-Vorgang gewählt wird. An die andere Elektrode der Interdigitalstruktur wird eine Referenzspannung angelegt, wobei die Referenzspannung eine konstante Spannung, beispielsweise das Massepotential, alternativ eine zeitlich veränderbare, vorzugsweise von einem Sensorereignis unabhängige, Referenzspannung sein kann. Die Vorrichtung gemäß der zweiten Ausführungsform der Erfindung weist zwei entgegengesetzt gepolte Spannungsquellen auf. Mittels einer zweiten Schaltereinheit zwischen den Spannungsquellen und dem Komparator wird entsprechend der Zyklen zwischen den beiden Spannungsquellen geschaltet. Zudem weist die Vergleichereinheit gemäß der zweiten Ausführungsform einen Komparator auf, der das Potential der mindestens einen Elektrode mit dem Referenzpotential vergleicht.

Gemäß einer weiteren bevorzugten Ausführungsform der Erfindung können die beiden Stromquellen welche gemäß der zweiten Ausführungsform der Erfindung vorgesehen sind erfindungsgemäß durch jeweils einen ohmschen oder auch nichtlinearen Widerstand ersetzt sein.

Gemäß einer weiteren bevorzugten Ausführungsform der Erfindung kann der Ansteuerschaltkreis zwischen dem Sensorelement und der Vergleichereinheit angeordnet sein. Die Schaltereinheit für das jeweilige Umschalten der Stromflussrichtung durch die mindestens eine Elektrode ist zwischen dem Ansteuerschaltkreis und dem Sensorelement angeordnet. Diese Anordnung ist vorteilhaft, da eine Reduzierung der Schaltvorgänge erzielt wird, da nicht mehr die Stromquelle und die Referenzspannungsquelle mittels der Schaltereinheit periodisch umgeschaltet werden, sondern mittels einer Schaltereinheit die Elektroden des Sensorelementes.

Im Weiteren wird das erfindungsgemäße Verfahren für das Ermitteln eines Sensorereignisses an einem Sensorelement näher beschrieben. Ausgestaltungen der Sensor-Anordnung gelten auch für das Verfahren zum Betreiben der Sensor-Anordnung.

Ein Aspekt der Erfindung ist in einem wiederholten Umschalten zwischen einem Auflade-Vorgang und/oder einem Entlade-Vorgang einer Interdigitalelektrode zu sehen. Die Interdigitalelektrode weist vorzugsweise eine kammförmige Struktur auf.

Gemäß der Erfindung werden die beiden Elektroden der Interdigitalelektrode des Sensorelementes gegenphasig mittels eines vorzugsweise konstanten Stroms mit jeweils entgegengesetztem Vorzeichen aufgeladen und/oder entladen. Daraus resultiert zwischen den beiden Elektroden eine Potentialdifferenz, welche kontinuierlich mit einem Referenzpotential der mindestens einen Referenzspannungsquelle verglichen wird. Entspricht und/oder überschreitet beim Vergleichen die Spannung der mindestens einen Elektrode des Sensorelementes den Wert des Referenzpotentials, dann wird der jeweils an den beiden Elektroden anliegende Strom gemäß der Erfindung im Gegensatz zu dem vorangegangenem Aufladevorgang und/oder Entlade-Vorgang invertiert.

Alternativ ist auch ein getaktetes, zu bestimmten Zeitpunkten definiertes Vergleichen der Potentialdifferenz mit dem Referenzpotential möglich.

Bevorzugt weist die Vergleichereinheit einen Komparator auf, welcher mit einer Referenzspannungsquelle gekoppelt ist, und welcher die Potentialdifferenz mit dem Referenzpotential vergleicht. Nach einem Umschalt-Vorgang wird mittels des Komparators ein elektrisches Signal an einen Auswerteschaltkreis übermittelt. Der Auswerteschaltkreis kann entweder im Sensorelement integriert sein und beispielsweise eine Zähl-Vorrichtung aufweisen oder das Ausgangssignal des Komparators wird durch Auswahl des Sensorelements direkt auf eine Auslese-Leitung geschaltet, die das digitale Ausgangssignal des Komparators an periphere Schaltungen der Sensor-Matrix weiterleitet. Die peripheren Schaltungen ermitteln dann die benötigte Zeitdauer für das Aufladen und/oder Entladen der Elektroden des Sensorelementes zweier aufeinander folgender Umschalt-Vorgängen, wobei innerhalb eines Zyklus jeweils eine der beiden Elektroden aufgeladen wird, während die andere entladen wird. Gemäß der vorliegenden Erfindung kann jede Sensor-Anordnung sequentiell betrieben werden, daher ist eine Zähl-Vorrichtung nicht zwingend erforderlich. Für das sequentielle Betreiben werden digitale Schaltungen verwendet, mit welchen entsprechenden Auswahl-, Aktivierungs- und Deaktivierungs-Signalen erzeugt werden, um das jeweilige Sensorelemente zu steuern.

Die Zähl-Vorrichtung zählt die zeitlich aufeinander folgenden Signale des Komparators in einem vorgebbaren Zeitintervall, woraus eine Frequenz f resultiert und gemäß folgender Gleichung kann eine benötigte Zeitdauer T ermittelt werden, welche einer direkten Messung des Impedanz-Wertes entspricht:

$$\frac{1}{f} = T = 2R_{sensor}C_{sensor} \ln \frac{1}{1 - \dfrac{V_{ref}}{I_{ref}R_{sensor}}}. \tag{5}$$

Die für einen Zyklus wesentlichen Größen sind $R_{sensor}$ und $C_{sensor}$, welche direkt die Impedanz des Sensorelements repräsentieren, wobei $V_{ref}$ die Spannung der

Referenzspannungsquelle und $I_{ref}$ der Auflade- und/oder Entladestrom der Elektroden ist.

Der Wert der Impedanz setzt sich aus einem resistiven und einem kapazitiven Anteil zusammen. Die charakteristischen Informationen über ein Sensorereignis sind im Wesentlichen in dem kapazitiven Anteil der gemessenen Impedanz enthalten. Jedoch ist der Wert des resistiven Anteils in dem aus der Messung erhaltenen Signal enthalten. Somit ist es notwendig ein Verfahren anzuwenden, um den kapazitiven Anteil aus dem aus der Messung erhaltenen Signal herauszufiltern.

Durch das Variieren des Auflade- und/oder Entladestroms der Elektroden wird entweder der resistive oder der kapazitive Anteil erhalten. Für $I_{ref} \to 0$, trägt im Wesentlichen der resistive Anteil zu dem Signal bei. Für $I_{ref} \to \infty$ trägt maßgeblich der kapazitive Anteil zu dem Signal bei. Um gemäß der Erfindung den resistiven wie auch den kapazitiven Anteil für ein eindeutiges Messergebnis zu ermitteln, ist eine von $I_{ref}$ abhängige Funktion für T zweckmäßig. Daraus wird dann mittels der folgenden Gleichung der kapazitive Anteil ermittelt:

$$C = -\frac{1}{2V_{ref} \dfrac{\partial}{\partial I_{ref}}\left[\left(I_{ref} \dfrac{\partial T}{\partial I_{ref}}\right)^{-1}\right]} \qquad (6)$$

Anschaulich ist erfindungsgemäß eine Möglichkeit geschaffen, unter Verwendung des Impedanz-Verfahrens eine vereinfachte und hochgenaue Sensor-Anordnung bereitzustellen und zu betreiben.

Ferner kann die Sensor-Architektur für eine beliebige Detektions-Technik verwendet werden. Denkbar sind auch rein resistive oder rein kapazitive Messverfahren. Entsprechend dem jeweiligen Messverfahren muss die Beschichtung der Sensor-Elektrode geändert werden. Für einen DNA-Sensor werden beispielsweise einzelne DNA-Stränge, welche gegenüber den zu erfassenden Partikeln komplementär sind auf die Sensorelektroden aufgebracht.

Gemäß einer Ausgestaltung der Erfindung ist die Sensorereingnis-Ermittlungseinheit derart eingerichtet, dass aus den ermittelten Zeitdauern des Aufladevorgangs und/oder des Entladevorgangs eine Aufladefrequenz und/oder eine Entladefrequenz oder eine Zyklusfrequenz, wobei ein Zyklus jeweils einen Aufladevorgangs und einen Entladevorgang aufweist, ermittelt wird.

Ferner kann die Sensor-Architektur auch für das Detektieren von chemischen Substanzen, wie z.B. Lösungen und Gase eingesetzt werden. Für das Nachweisen von Substanzen in chemischen Lösungen ist es vorteilhaft die Beschichtung des Sensorelementes derart einzurichten, so dass diese gegenüber der nachzuweisenden Substanz reaktiv ist, um Veränderungen einer dielektrischen Konstante, einer Leitfähigkeit oder eines Impedanz-Wertes ermitteln zu können. Wird das Sensorelement als ein Flüssigkeitssensor betrieben, müssen die Elektroden nicht notwendiger weise in einem direkten Kontakt mit der zu analysierenden Flüssigkeit stehen. Auf den Elektroden wird vorzugsweise ein gegenüber der Flüssigkeit inertes dielektrisches Material aufgebracht. Die Sensor-Beschichtung wird dann auf dieser inerten dielektrischen Schicht aufgebracht. Jedoch entsteht dadurch ein höherer Aufwand, um beispielsweise einen Impedanz-Wert zu ermitteln, da die Elektroden durch die dielektrische Schicht von dem Analyten isoliert sind.

Anschaulich werden eine Ansteuerelektronik und eine einfache Auswerteelektronik bereitgestellt, so dass mehrere Sensor-Anordnungen parallel angeordnet werden können bei dem die Sensorelemente Matrixförmig angeordnet sind. Dadurch wird ein Sensor-Array mit einer hohen Nachweisempfindlichkeit geschaffen, da für jede Sensor-Anordnung eine einfache Ansteuerelektronik und Auswerteelektronik in CMOS-Technologie realisiert werden kann, woraus sich ein Vorteil einer geringeren Anfälligkeit gegenüber Störsignalen ergibt.

Der Immobilisierungsbereich der ersten Elektrode kann mit einem Material beschichtet sein, das Fängermoleküle immobilisieren kann.

Der Immobilisierungsbereich kann somit beispielsweise eines der folgenden Materiale aufweisen:

- Hydroxylreste,
- Epoxidreste,
- Aminreste,
- Acetoxyreste,
- Isocyanatreste,
- Succinimidylesterreste,
- Thiolreste,
- Gold,
- Silber,
- Platin,
- Titan,
- Palladium,
- Siliziumdioxid,
- Siliziumnitrid

Der Immobilisierungsbereich kann sowohl zum Halten von Liganden ausgestaltet sein, mit denen Peptide oder Proteine immobilisiert werden können als auch zum Halten von DNA-Fängermolekülen, mit denen DNA-Moleküle immobilisiert werden können.

Gemäß der Erfindung dient die Sensor-Anordnung bzw. das Sensorelement für das Erfassen von Biomolekülen, Biopolymeren oder auch makromolekulare Biopolymeren bzw. sind die Sensor-Anordnung bzw. das Sensorelement derart eingerichtet, dass Biomoleküle, Biopolymere oder auch makromolekulare Biopolymere erfasst werden können.

Unter makromolekularen Biopolymeren sind beispielsweise Proteine oder Peptide oder auch DNA-Stränge einer jeweils vorgegebenen Sequenz zu verstehen.

Sollen als makromolekulare Biopolymere Proteine oder Peptide erfasst werden, so sind die immobilisierten Moleküle Liganden, beispielsweise Wirkstoffe mit einer möglichen Bindungsaktivität, die die zu erfassenden Proteine oder Peptide an die jeweilige Elektrode binden, auf der die entsprechenden Liganden angeordnet sind.

Als Liganden kommen Enzymagonisten oder Enzymantagonisten, Pharmazeutika, Zucker oder Antikörper oder irgendein Molekül in Betracht, das die Fähigkeit besitzt, Proteine oder Peptide spezifisch zu binden.

Werden als makromolekulare Biopolymere DNA-Stränge einer vorgegebenen Sequenz verwendet, die mittels des Biosensors erfasst werden sollen, so können mittels des Biosensors DNA-Stränge einer vorgegebenen Sequenz mit DNA-Fängermolekülen mit der zu der Sequenz der immobilisierten DNA-Stränge komplementären Sequenz als Moleküle auf der ersten Elektrode hybridisiert werden.

Im Rahmen dieser Beschreibung ist unter einem Fängermolekül sowohl ein Ligand als auch ein DNA-Fängermolekül zu verstehen.

Der Immobilisierungsbereich kann zum Halten von Fängermolekülen ausgestaltet sein, mit denen Peptide oder Proteine immobilisiert werden können.

Alternativ kann der Immobilisierungsbereich zum Halten von DNA-Fängermolekülen ausgestaltet sein, mit denen DNA-Moleküle immobilisiert werden können.

Ausführungsbeispiele der Erfindung sind in den Figuren dargestellt und werden im Weiteren näher erläutert.

Es zeigen:

Figur 1 — eine Sensor-Anordnung gemäß dem Stand der Technik,

Figuren 2A bis 2F — Querschnittsansichten eines Teilbereichs der in Figur 1 gezeigten Sensor-Anordnung zu unterschiedlichen Zeitpunkten während eines Verfahrens zum Betreiben der Sensor-Anordnung,

Figuren 3A, 3B — eine Draufsicht und eine Querschnittansicht entlang der Schnittlinie I-I' einer Interdigitalelektroden-Anordnung gemäß dem Stand der Technik,

Figuren 4A, 4B — Querschnittsansichten eines ersten Teilbereichs der in Figur 3 gezeigten Interdigitalelektroden-Anordnung zu unterschiedlichen Zeitpunkten während eines Verfahrens zum Betreiben der Interdigitalelektroden-Anordnung gemäß dem Stand der Technik,

Figur 5 — eine Querschnittsansicht eines zweiten Teilbereichs der in Figur 3 gezeigten Interdigitalelektroden-Anordnung gemäß dem Stand der Technik,

Figur 6 — ein Ersatzschaltbild des ersten Teilbereichs der Interdigitalelektroden-Anordnung aus Figur 3 gemäß dem Stand der Technik,

Figuren 7A, 7B — Ersatzschaltbilder des ersten Teilbereichs der in Figur 3 gezeigten Interdigitalelektroden-Anordnung gemäß dem Stand der Technik,

Figuren 8A, 8B — eine Draufsicht und eine Querschnittansicht entlang der Schnittlinie II-II' einer Sensor-Anordnung mit Referenzelektrode gemäß dem Stand der Technik,

Figur 9 — ein Ersatzschaltbild der Sensor-Anordnung aus Figur 8 gemäß dem Stand der Technik,

Figur 10 — ein anderes Ersatzschaltbild der Sensor-Anordnung aus Figur 8 gemäß dem Stand der Technik,

Figur 11 — eine Draufsicht des Sensorelements mit einer kammförmigen Struktur, wobei das Sensorelement eine Interdigitalstruktur ist, und eine schematische Querschnittsansicht der Interdigitalstruktur,

Figur 12a — eine schematische Querschnittsansicht eines Ausschnittes der Interdigitalstruktur benachbarter Elektroden mit auf den Elektroden immobilisierte Fängermoleküle,

| | |
|---|---|
| Figur 12b | eine schematische Querschnittsansicht gemäß der Anordnung aus Figur 12a nach einem Hybridisierungsereignis, |
| Figur 13 | eine schematische Querschnittsansicht der Interdigitalstruktur und des elektrischen Feldes benachbarter Fingern der Elektroden, |
| Figur 14 | eine schematische Querschnittsansicht der Interdigitalstruktur und ein Ersatzschaltbild für die Widerstands- bzw. Kapazitätswerte des Elektrolyten und ein Ersatzschaltbild für die Widerstands- bzw. Kapazitätswerte der näheren Umgebung der Elektroden, |
| Figur 15 | eine Sensor-Anordnung gemäß einer ersten bevorzugten Ausführungsform der Erfindung, |
| Figur 16 | den Verlauf von Spannungs-Signale beim Durchführen einer Messung, |
| Figur 17 | ein Ersatzschaltbild der in Figur 15 gezeigten Sensor-Anordnung gemäß der ersten Ausführungsform der Erfindung, |
| Figur 18 | eine vereinfachte Sensor-Anordnung gemäß der zweiten Ausführungsform der Erfindung, |
| Figur 19 | eine Sensor-Anordnung gemäß einer dritten Ausführungsform der Erfindung, |
| Figur 20 | eine Sensor-Anordnung. |

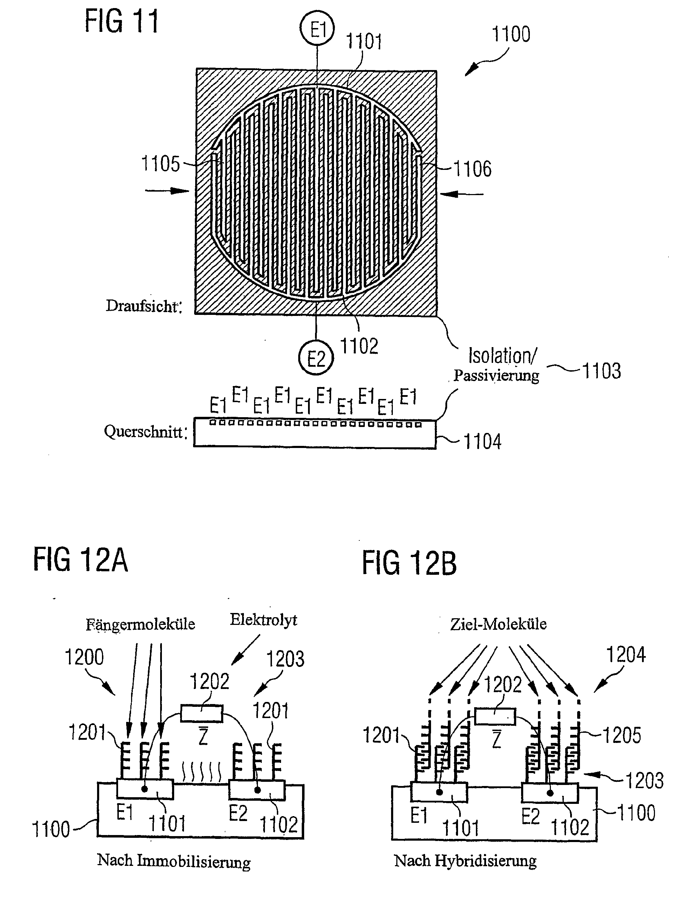

Im Weiteren wird bezugnehmend auf **Fig. 11** ein Sensorelement 1100 gemäß einer ersten Ausführungsform der Erfindung beschrieben.

Das Sensorelement 1100 weist eine erste Elektrode 1101 und eine zweite Elektrode 1102 auf, wobei die erste Elektrode 1101 und die zweite Elektrode 1102 eine kammförmige Struktur aufweisen. Die Finger der ersten Elektrode 1101 und der zweiten Elektrode 1102 sind ineinander verzahnt. Ferner weist das Sensorelement 1100 eine Isolationsschicht bzw. Passivierungsschicht 1103 auf, auf welcher die erste Elektrode 1101 und die zweite Elektrode 1102 angeordnet sind. Des Weiteren zeigt die Fig. 11 eine schematische Querschnittsansicht 1104 des Sensorelementes 1100, wobei die verzahnte Struktur der Finger 1105 der ersten Elektrode 1101 mit den Fingern 1106 der zweiten Elektrode 1102 ersichtlich ist.

Im Weiteren wird bezugnehmend auf die **Figuren 12a und 12b** eine Sensor-Anordnung gemäß einer ersten Ausführungsform der Erfindung beschrieben.

Die Fig. 12a zeigt einen Teil 1200 einer schematischen Querschnittsansicht des Sensorelementes 1100 nach erfolgter Immobilisierung von Fängermolekülen. E1 bezeichnet einen Finger der ersten Elektrode 1101 und E2 einen Finger der zweiten Elektrode 1102. Auf den Fingern der jeweiligen Elektrode sind Fängermoleküle 1201 immobilisiert, wobei gemäß dem Stand der Technik auch Fängermoleküle zwischen den einzelnen Fingern der Elektroden immobilisiert werden können. Gemäß dem Verfahren der Erfindung wird der Wert einer Impedanz Z 1202 zwischen der ersten Elektrode 1101 und der zweiten Elektrode 1102 ermittelt.

Die Fig. 12b zeigt einen Teil 1204 einer schematischen Querschnittsansicht des Sensorelementes 1100 nach einem Hybridisierungsereignis, wobei z.B. DNA-Halbleiterstränge 1205 mit den Fängermolekülen 1201 hybridisieren.

Anschaulich verändert sich infolge eines Sensorereignisses, das heißt einer Hybridisierung zwischen ersten Fängermolekülen 1201 und zu erfassenden DNA-Halbsträngen 1205 auf der ersten Sensor-Elektrode 1101, der Wert der elektrischen Impedanz zwischen der ausgewählten Sensor-Elektrode 1101 und dem Elektrolyten 1203. Dies ist anschaulich darauf zurückzuführen, dass aufgrund des Hybridisierungs-Ereignisses Elektrolytflüssigkeit mit vergleichsweise guter elektrischer Leitfähigkeit und hoher Dielektrizitätskonstante aus einem Umgebungsbereich der ausgewählten Sensor-Elektrode 1101 verdrängt wird und durch DNA-Halbstränge 1205 mit von dem Elektrolyten 1203 unterschiedlichen elektrischen Eigenschaften ausgetauscht wird. Dadurch ändern sich der Wert der Impedanz 1202, und insbesondere der Wert der Kapazität zwischen der ersten Elektrode 1101 und der zweiten Elektrode 1102, da sowohl die DNA-Halbstränge 1205 wie auch die Fängermoleküle 1201 als organische Moleküle gegenüber den elektrischen Eigenschaften des Elektrolyten 1203 üblicherweise eine geringere elektrische Leitfähigkeit und Dielektrizitätskonstante aufweisen.

Aus dieser veränderten Kapazität kann auf die Veränderung der Impedanz 1202 und daher auf die Quantität der auf der ersten Sensor-Elektrode 1101 erfolgten Hybridisierungsereignisse geschlossen werden. Daher ist die Veränderung der Impedanz ein Maß für die Konzentration der DNA-Halbstränge 1205 in dem Analyten 1203, so dass der Wert der Konzentration bestimmbar ist.

Bei der Sensor-Anordnung 1100 fungiert anschaulich ein und dieselbe Sensor-Elektrode in unterschiedlichen Betriebszuständen als ausgewählte Sensor-Elektrode oder als Gegenelektrode.

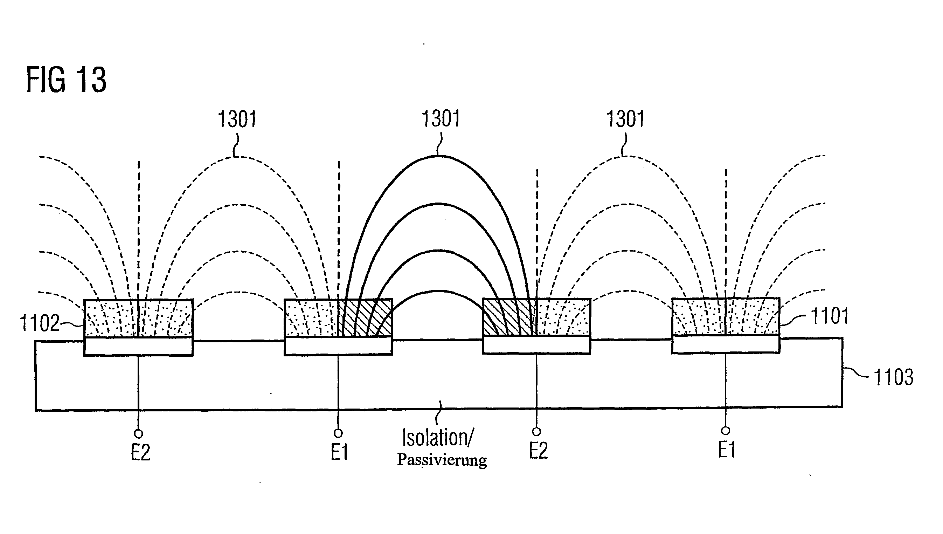

Die **Fig. 13** zeigt eine schematische Querschnittsansicht des Sensorelementes 1100 und einen allgemeinen Verlauf der Feldlinien 1301 des elektrischen Feldes zwischen den Fingern 1105, 1106 der Elektroden 1101, 1102 des Sensorelementes 1100.

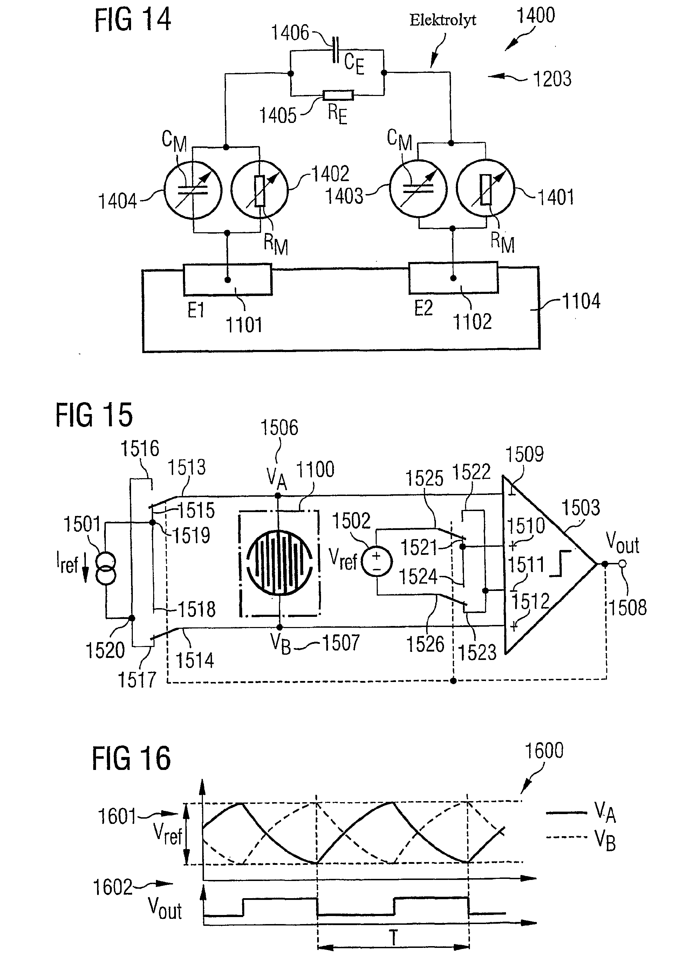

Im Weiteren wird bezugnehmend auf **Fig. 14** eine schematische Querschnittsansicht der Interdigitalstruktur des Sensorelementes und ein Ersatzschaltbild der Widerstands- und Kapazitäts-Werte des Elektrolyten und der näheren Umgebung der Elektroden beschrieben.

Die Anordnung 1400 gemäß der Fig. 14 zeigt benachbarte Elektrodenstrukturen der ersten Elektrode 1101 und der zweiten Elektrode 1102 des Sensorelementes 1100, variable Ersatz-Widerstände $R_M$ 1401, 1402 und variable Ersatz-Kapazitäten $C_M$ 1403, 1404 welche die elektrischen Eigenschaften des Umgebungsbereiches der Elektrodenstruktur repräsentieren, einen variablen Ersatz-Widerstand $R_E$ 1405 und eine variable Ersatz-Kapazität $C_E$ 1406, welche die elektrischen Eigenschaften des Elektrolyten repräsentieren, sowie die Isolations- bzw. Passivierungsschicht 1104, wobei jeweils ein Widerstand $R_M$ mit einer Kapazität $C_M$ und ein Widerstand $R_E$ mit einer Kapazität $C_E$ parallel geschaltet ist. Wie ferner in Fig.14 gezeigt, ist die Parallelschaltung aus Komponenten 1401, 1403, die Parallelschaltung aus Komponenten 1402, 1404 und die Parallelschaltung aus Komponenten 1405, 1406 seriell geschaltet. Die Komponenten 1401 bis 1406 sind variabel dargestellt, um zu verdeutlichen, dass infolge eines Sensorereignisses sich deren Werte verändern.

Gemäß der Erfindung ist der für ein Hybridisierungsereignis charakteristische Wert die Kapazität $C_M$. Aus der benötigten Zeitdauer für das Aufladen und/oder Entladen der mindestens einen Elektrode 1101 des Sensorelementes 1100 wird der Wert der Kapazität $C_M$ ermittelt. Eine Veränderung des Wertes der Kapazität $C_M$ zeigt direkt das biochemische Ereignis, welches nachgewiesen werden soll. Die elektrischen Eigenschaften des Elektrolyten 1203 können gegenüber der Kapazität $C_M$ vernachlässigt werden. Gemäß diesen Vereinfachungen wird deutlich, dass zwischen den Beiträgen der Kapazität $C_M$ und den Beiträgen des Widerstandes $R_M$ unterschieden werden muss. Das Extrahieren des Kapazitäts-Wertes $C_M$ wird gemäß der Vorrichtung und dem Verfahren der vorliegenden Erfindung erreicht.

Im Weiteren wird bezugnehmend auf **Fig. 15** eine Sensor-Anordnung 1500 gemäß einer ersten bevorzugten Ausführungsform der Erfindung beschrieben.

Die Sensor-Anordnung 1500 weist das Sensorelement 1100, eine Stromquelle 1501, eine Referenzspannungsquelle 1502, einen Komparator 1503, eine erste Schaltereinheit 1504 und eine zweite Schalteinheit 1505 auf. Das Sensorelement 1100 weist zwei Elektroden 1101, 1102 auf, welche als eine Interdigitalstruktur ausgeführt sind. An einer ersten Elektrode 1101 liegt die Spannung $V_A$ 1506 und an der anderen, d.h. der zweiten Elektrode 1102 liegt die Spannung $V_B$ 1507 an. Ferner weist der Komparator 1503 die Anschlüsse 1509, 1510, 1511 und 1512 auf, wobei die Anschlüsse 1509 und 1511 Negativ-Anschlüsse und die Anschlüsse 1510 und 1512 Positiv-Anschlüsse sind und der Anschluss 1510 zwischen den Anschlüssen 1509 und 1511, und der Anschluss 1511 zwischen den Anschlüssen 1510 und 1512 angeordnet ist. Die erste Elektrode 1101 ist mit dem Anschluss 1509 und die zweite Elektrode 1102 mit dem Anschluss 1512 verbunden. Zwischen dem Komparator 1503 und dem Sensorelement 1100 sind die Referenzspannungsquelle 1502 und die Schaltereinheit 1505 angeordnet, wobei die Schaltereinheit 1505 zwischen der Referenzspannungsquelle 1502 und dem Komparator 1503 angeordnet ist, wobei ein erster Anschluss der Schaltereinheit 1505 mit dem Anschluss 1510 und ein zweiter Anschluss mit Anschluss 1511 des Komparators 1503 verbunden ist. Das Sensorelement 1100 ist zwischen der Schaltereinheit 1504 und dem Komparator 1503 angeschlossen, wobei die Schaltereinheit 1504 zwei Anschlüsse 1513, 1514 aufweist. Der Anschluss 1513 ist mit der ersten Elektrode 1101 und der Anschluss 1514 mit der zweiten Elektrode 1102 verbunden. Ferner ist die Schaltereinheit 1504 zwischen der Stromquelle 1501 und dem Sensorelement 1100 angeschlossen. Aus dem Aufladevorgang und/oder Entlade-Vorgang der Elektroden 1101,1102 resultiert eine Potentialdifferenz, wobei die Stromquelle 1501 einen vorgegebenen elektrischen Strom, d.h. einen in der Stärke und der Richtung vorgegebenen Strom für das Aufladen und/oder Entladen bereitstellt. Der Komparator 1503 vergleicht während des Aufladens bzw. Entladens die Potentialdifferenz ($V_A$-$V_B$) mit dem Referenzpotential und sendet Initialisierungs-Signale für das Umschalten der Schaltereinheiten an die jeweilige Schaltereinheit, wenn der Wert der Potentialdifferenz ($V_A$-$V_B$) den Wert des Referenzpotentials erreicht hat. Erreicht die Potentialdifferenz ($V_A$-$V_B$) dem Betrag nach den Spannungswert der Referenzspannungsquelle 1502, werden mittels der Schaltereinheit 1504 und der Schaltereinheit 1505 die Flussrichtung des Stroms der Stromquelle 1501 und die Richtung der Spannung der Referenznungsquelle 1502 invertiert, wobei die Schaltereinheiten 1504, 1505 jeweils zwei Schalter aufweisen.

Anders ausgedrückt ist in einer ersten Schalterstellung 1515, der erste Anschluss 1519 der Stromquelle 1501 mit der ersten Elektrode 1101 und in einer ersten Schalterstellung 1516 der zweite Anschluss 1520 der Stromquelle 1501 mit der zweiten Elektrode 1102 verbunden, wodurch ein vorgegebener Strom in positiver Richtung durch die erste Elektrode 1101 und ein vorgegebener Strom in negativer Richtung durch die zweite Elektrode 1102 fließt, wobei dadurch die erste Elektrode 1101 aufgeladen und die zweite Elektrode 1102 entladen wird. Nach einem Umschalt-Vorgang ist in einer zweiten Schalterstellung 1516 der zweite Anschluss 1520 der Stromquelle 1501 mit der ersten Elektrode 1101 und in einer zweiten Schalterstellung 1518 der erste Anschluss 1519 der Stromquelle 1501 mit der zweiten Elektrode 1102 verbunden, wodurch ein vorgegebener Strom in negativer Richtung durch die erste Elektrode und ein Strom in positiver Richtung durch die zweite Elektrode fließt, wobei dadurch die erste Elektrode 1101 entladen und die zweite Elektrode 1102 aufgeladen wird.

Entsprechend der Schalterstellungen 1515, 1516, 1517 und 1518 wird die mittels der Schaltereinheit 1505 die Richtung der Referenzspannung umgeschaltet. Während eines Auflade-Vorgangs ist in einer ersten Schalterstellung 1521 ein erster Anschluss 1525 der Referenzspannungsquelle 1502 mit dem Positiv-Anschluss 1510 des Komparators 1503 verbunden und in einer ersten Schalterstellung 1523 ist ein zweiter Anschluss 1526 der Referenzspannungsquelle 1502 mit dem Negativ-Anschluss 1511 des Komparators 1503 verbunden. Während eines Entlade-Vorgangs ist in einer zweiten Schalterstellung 1522 ein erster Anschluss 1525 der Referenzspannungsquelle 1502 mit dem Negativ-Anschluss 1511 des Komparators 1503 verbunden und in einer zweiten Schalterstellung 1524 ist ein zweiter Anschluss 1526 der Referenzspannungsquelle 1502 mit dem Positiv-Anschluss 1510 des Komparators 1503 verbunden.

Die jeweiligen Schalterstellungen werden mittels Initialisierungssignalen, welche von dem Komparator entsprechend gesendet werden, erhalten.

Dadurch werden die Elektroden 1101, 1102 der in der Figur 15 gezeigten bevorzugten Ausführungsform entgegengesetzt aufgeladen und/oder entladen und der Auflade-Vorgang und/oder Entlade-Vorgang startet von neuem. Nach jedem Umschalt-Vorgang gibt der Komparator 1503 ein Signal in Form einer Spannung $V_{out}$ 1508 aus, wobei das Ausgabesignal des Komparators ein digitales Signal ist.

In der **Fig.16** sind ein aus dem Betrieb resultierendes Spannungsdiagramm 1600 jeweils für die Potentialdifferenz 1601 zwischen der ersten Elektrode 1101 und der zweiten Elektrode 1102 des Sensorelementes 1100 und für die SignalAusgangsspannung 1602 des Komparators 1503 gezeigt. Das Spannungsdiagramm 1601 zeigt das entgegengesetzte Aufladen bzw. Entladen der ersten Elektrode 1101 und der zweiten Elektrode 1102. Die Spannungen $V_A$ und $V_B$ sind die Spannungen, welche in der Fig.15 erläutert wurden. Wird die erste Elektrode 1101 aufgeladen, steigt der Wert des Spannungsverlaufs bis auf die Referenzspannung. Zu der gleichen Zeit wird die zweite Elektrode 1102 im gleichen Maß entladen, wodurch die beiden Spannungsverläufe der Spannungen $V_A$ und $V_B$ den gleichen aber einen invertierten Verlauf aufweisen, wobei der Spannungsverlauf einen zickzackförmigen Verlauf aufweist.

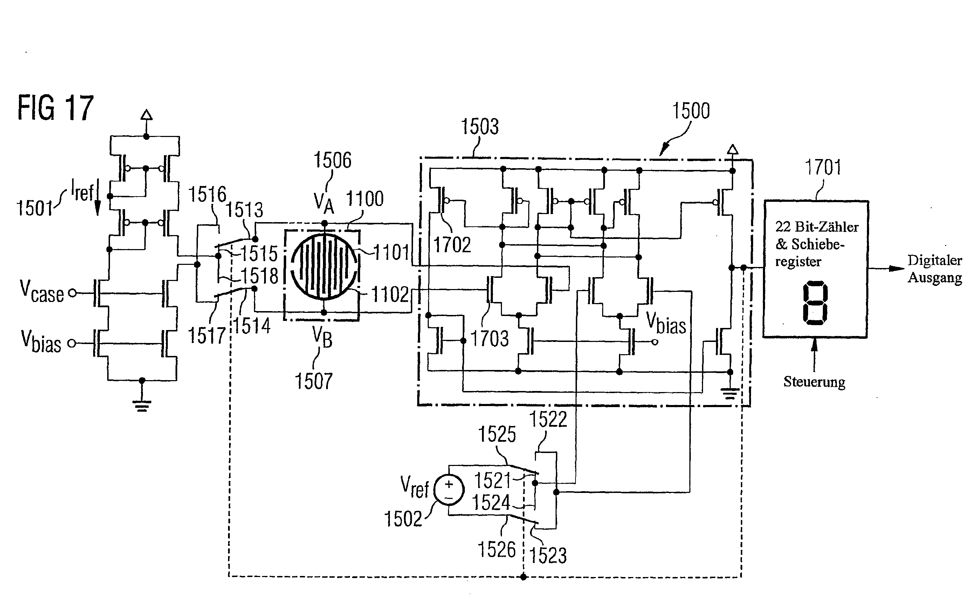

Im Weiteren wird bezugnehmend auf **Fig.17** eine detaillierte Ansicht der Sensor-Anordnung 1500 der in der Figur 15 gezeigten bevorzugten Ausführungsform beschrieben.

Die Sensor-Anordnung gemäß der Fig.17 weist die gleiche Schaltstruktur der in der Fig.15 gezeigten Sensor-Anordnung, die Spannungsquelle 1501, das Sensorelement 1100; die Referenzspannungsquelle 1502, den Komparator 1503, die erste Schalteinheit 1504, die zweite Schalteinheit 1505 und einen Zähler 1701 auf, wobei der Zähler 1701 als ein Schieberegister ausgebildet ist. Der Komparator 1503 weist eine Schaltungsanordnung mit Transistoren 1702 und Transistoren 1703 auf. Die Konstantstromquelle 1501, welche einen vorgegebenen Strom bereitstellt, weist ebenfalls eine Schaltungsanordnung mit Transistoren 1702 und Transistoren 1703 auf Gemäß der vorliegenden Erfindung zählt der Zähler 1701 in einer gegebenen Zeitdauer die Anzahl der digitalen Ausgabesignale des Komparators 1503, welche jeweils mit einem Umschalt-Vorgang korrespondieren. Mit dem zeitlichen Aufeinanderfolgen zweier Signale des Komparators 1503 korrespondiert ein Auflade-Vorgang bzw. Entlade-Vorgang. Aus der Zeitdauer die für das Aufladen und/oder Entladen benötigt wird, wird ermittelt, ob ein Sensorereignis stattgefunden hat. Aus dieser Zeitdauer wird gemäß den oben beschriebenen Gleichungen der Wert einer Kapazität C, welcher mit dem Sensorereignis korrespondiert, ermittelt, wobei abhängig von dem Analyten und von der Sensor-Anordnung ein unterer Schwellenwert und ein oberer Schwellenwert für die Kapazität empirisch ermittelt wird. Liegt der Wert der ermittelten Kapazität innerhalb dieser beiden Grenzwerte, ist ein Sensorereignis aufgetreten.

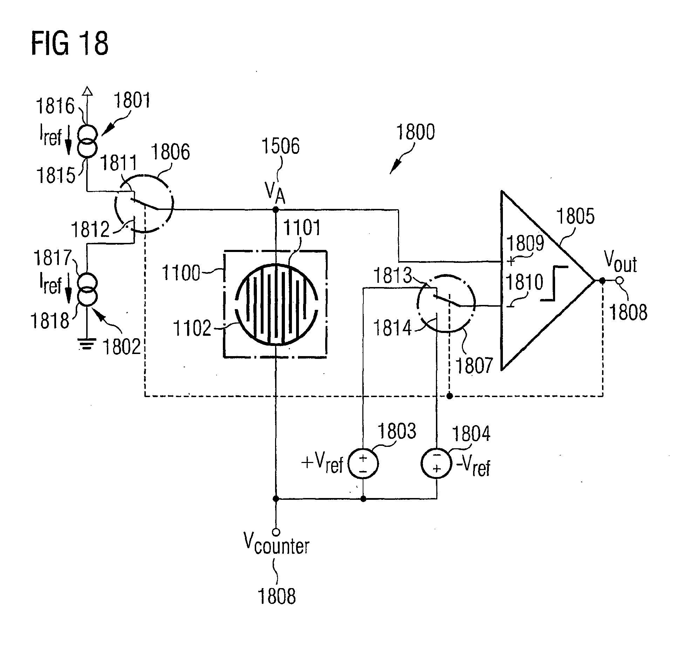

Im Weiteren wird bezugnehmend auf **Fig.18** eine Sensor-Anordnung gemäß einer zweiten Ausführungsform der Erfindung beschrieben.

Die Sensor-Anordnung 1800 weist das Sensorelement 1100, die erste Elektrode 1101, die zweite Elektrode 1102, eine erste Stromquelle 1801, eine zweite Stromquelle 1802, eine erste Referenzspannungsquelle 1803, eine zweite Referenzspannungsquelle 1804, einen Komparator 1805, eine erste Schaltereinheit 1806, eine zweite Schaltereinheit 1807 und eine Vorrichtung für das Bereitstellen eines Bezugspotentials 1808 auf. Der Komparator 1805 weist einen Positiv-Anschluss 1809, an welchen die erste Elektrode 1101 des Sensorelements 1100 angeschlossen ist, und einen Negativ-Anschluss 1810, an welchen die Schaltereinheit 1807 angeschlossen ist, auf. An die Schaltereinheit 1807 sind die Spannungsquelle 1803, 1804 mit jeweils einem Anschluss angeschlossen, wobei die Schaltereinheit 1807 zwischen der Spannungsquelle 1803, 1804 umschaltet. Des Weiteren liefern die beiden Spannungsquellen 1803, 1804 Referenzpotentiale mit entgegengesetztem Vorzeichen. Die Spannungsquellen 1803, 1804 sind mit einem zweiten Anschluss an die zweite Elektrode 1102 des Sensorelementes 1100 angeschlossen. Somit ist die Schaltereinheit 1807 zwischen dem Komparator 1805 und den Spannungsquellen 1803, 1804 angeschlossen.

Gemäß der zweiten bevorzugten Ausführungsform wird an eine der Elektroden 1102 des Sensorelementes 1100 ein vorgegebenes Bezugspotential 1808 gelegt. Die andere Elektrode 1101 des Sensorelementes 1100 wird gemäß den Mitteln der komplementären Stromquellen 1801 und 1802 periodisch aufgeladen und/oder entladen, wobei der Komparator 1805 die Spannung $V_A$ 1506 der Elektrode 1101 während des Auflade-Vorgangs und/oder Entlade-Vorgangs mit entweder der Referenzspannung der Spannungsquelle 1803 oder mit der Referenzspannung der Spannungsquelle 1804 vergleicht. Erreicht die Spannung 1506 der Elektrode 1101 eine der Referenzspannungen-der Spannungsquellen 1803, 1804, so ist beispielsweise der Auflade-Vorgang beendet und die Elektrode 1101 wird entladen.

Während eines Auflade-Vorgangs ist ein erster Anschluss 1815 der Stromquelle 1801 über eine erste Schalterstellung 1811 der Schaltereinheit 1806 mit der ersten Elektrode 1101 verbunden und ein zweiter Anschluss 1816 der Stromquelle 1801 ist auf ein vorgegebenes Bezugspotential gelegt, wodurch die erste Elektrode 1101 mit einem vorgegebenen Strom aufgeladen wird, wobei die Stromflussrichtung von dem vorgegebenen Bezugspotential zu der Schaltereinheit 1806 gerichtet ist.

Während eines Entlade-Vorgangs ist ein erster Anschluss 1817 der Stromquelle 1802 über eine zweite Schalterstellung 1812 der Schaltereinheit 1806 mit der ersten Elektrode 1101 verbunden und ein zweiter Anschluss 1818 der Stromquelle 1802 ist auf ein vorgegebenes Bezugspotential gelegt, wodurch die erste Elektrode 1101 mit einem vorgegebenen Strom entladen wird, wobei die Stromflussrichtung von der Schaltereinheit 1806 zu dem vorgegebenes Bezugspotential gerichtet ist.

Während eines Auflade-Vorgangs wird mittels einer ersten Schalterstellung 1813 der Schaltereinheit 1807 die zweite Elektrode 1102 an die Referenzspannung der Spannungsquelle 1803 gelegt. Während eines Entlade-Vorgangs wird mittels einer zweiten Schalterstellung 1814 der Schaltereinheit 1807 die zweite Elektrode 1102 an die Referenzspannung der Spannungsquelle 1804 gelegt.

wobei sich der Strom in Bezug auf das Verwenden von den Widerständen 1901, 1902 aus dem Ohmschen Gesetz ableiten lässt.

Gemäß der Sensor-Anordnung 1900 müssen daher die Gleichungen (5)

$$\frac{1}{f} = T = 2R_{sensor}C_{sensor} \ln \frac{1}{1 - \frac{V_{ref}}{I_{ref}R_{sensor}}} \qquad (5)$$

und (6),

$$C = -\frac{1}{2V_{ref} \frac{\partial}{\partial I_{ref}} \left[\left(I_{ref} \frac{\partial T}{\partial I_{ref}}\right)^{-1}\right]}, \qquad (6)$$

welche oben beschrieben wurden, für das Berechnen der Impedanz 1202 entsprechend angepasst werden.

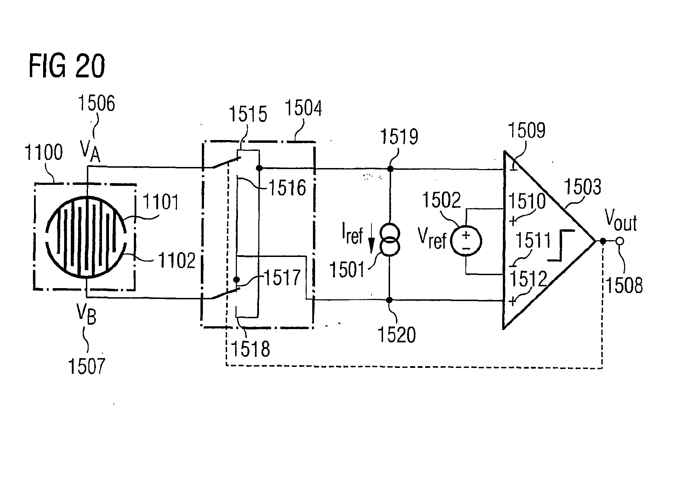

Im Weiteren wird bezugnehmend auf **Fig.20** eine Sensor-Anordnung 2000 beschrieben.

Die Referenzspannungsquelle 1502 ist direkt an den Komparator 1503 angeschlossen, wobei die Referenzspannungsquelle 1502 zwischen der Stromquelle 1501 und dem Komparator 1503 angeordnet ist. Ein Anschluss der Stromquelle 1501 ist mit dem Negativ-Anschluss 1509 und der andere mit dem Positiv-Anschluss 1512 des Komparators 1503 verbunden, wobei die welche oben beschrieben wurden, für das Berechnen der Impedanz 1202 entsprechend angepasst werden.

Im Weiteren wird bezugnehmend auf **Fig.20** eine vereinfachte Sensor-Anordnung 2000 der in der Fig.15 gezeigten bevorzugten Ausführungsform beschrieben.

Die Sensor-Anordnung 2000 weist die gleichen Elemente der in der Figur 15 gezeigten Sensor-Anordnung auf. Gemäß diesem nicht erfindungsgemäßen Beispiel wurde jedoch aus Gründen der Vereinfachung die Schaltungsanordnung variiert. Die Referenzspannungsquelle 1502 ist direkt an den Komparator 1503 angeschlossen, wobei die Referenzspannungsquelle 1502 zwischen der Stromquelle 1501 und dem Komparator 1503 angeordnet ist. Ein Anschluss der Stromquelle 1501 ist mit dem Negativ-Anschluss 1509 und der andere mit dem Positiv-Anschluss 1512 des Komparators 1503 verbunden, wobei die Stromquelle 1501 zwischen der Schaltereinheit 1504 und dem Komparator 1503 angeordnet ist. Ein Anschluss der Schaltereinheit 1504 ist mit dem Anschluss 1509 und der andere mit dem Anschluss 1512 des Komparators 1503 verbunden, wobei die Schaltereinheit 1504 zwischen dem Sensorelement 1100 und dem Komparator 1503 angeordnet ist. Die Schaltereinheit 1504 ist gegenüber der in der Figur 15 gezeigten Sensor-Anordnung 1500 um 180° um die Längsachse verdreht. Folglich ist die erste Elektrode 1101 des Sensorelementes 1100 an den Anschluss 1513 der Schaltereinheit 1504 angeschlossen und die zweite Elektrode 1102 des Sensorelementes 1100 an den Anschluss 1514 der Schaltereinheit 1504 angeschlossen.

Gemäß diesem Beispeil werden nicht die Stromflussrichtung der Stromquelle 1501 und die Richtung der Referenzspannung der Referenzspannungsquelle 1502 mittels der Schaltereinheit 1504 periodisch umgeschaltet, sondern die Flussrichtung des Stroms mittels der Schaltereinheit 1504 direkt an den Elektroden 1101, 1102 des Sensorelementes.

Anders ausgedrückt ist in einer ersten Schalterstellung 1515, der erste Anschluss 1519 der Stromquelle 1501 mit der ersten Elektrode 1101 und in einer ersten Schalterstellung 1516 der zweite Anschluss 1520 der Stromquelle 1501 mit der Zweiten Elektrode 1102 verbunden, wodurch ein vorgegebener Strom in positiver Richtung durch die erste Elektrode 1101 und ein vorgegebener Strom in negativer Richtung durch die zweite Elektrode 1102 fließt, wobei dadurch die erste Elektrode 1101 aufgeladen und die zweite Elektrode 1102 entladen wird. Nach einem Umschalt-Vorgang ist in einer zweiten Schalterstellung 1516 der zweite Anschluss 1520 der Stromquelle 1501 mit der ersten Elektrode 1101 und in einer zweiten Schalterstellung 1518 der erste Anschluss 1519 der Stromquelle 1501 mit der zweiten Elektrode 1102 verbunden, wodurch ein vorgegebener Strom in negativer Richtung durch die erste Elektrode und ein Strom in positiver Richtung durch die zweite Elektrode fließt, wobei dadurch die erste Elektrode 1101 entladen und die zweite Elektrode aufgeladen wird. 1526 der Referenzspannungsquelle 1502 mit dem Positiv-Anschluss 1510 des Komparators 1503 verbunden.

Die jeweiligen Schalterstellungen werden mittels Initialisierungssignalen, welche von dem Komparator entsprechend gesendet werden, erhalten.

Der Komparator 1503 vergleicht während des Aufladens und/oder Entladens die Referenzspannung der Referenzspannungsquelle 1502 mit der Potentialdifferenz $(V_A - V_B)$ des Sensorelementes 1100, bis die Potentialdifferenz $(V_A - V_B)$ der Referenzspannung entspricht bevor ein nächster Umschalt-Vorgang initialisiert wird.

Zur Minimierung der Schalt-Vorgänge innerhalb der Schaltungsanordnung werden lediglich die Elektroden 1101, 1102 des Sensorelementes 1100 periodisch umgeschaltet.

In diesem Dokument sind folgende Veröffentlichungen zitiert:

[1] M. Paeschke et al., Electroanalysis 1996, 7, No. 1, p. 1-8

[2] R. Hintzsche et al., "Microbiosensors using electrodes made in Si-technology", in "Frontiers in Biosensorics I - Fundamental Aspects", F. W. Scheller et al. ed., 1997, Birkhauser Verlag Basel

[3] WO 9322678

[4] DE 19610115 A1

[5] US Patent Serial No 60 / 007840

[6] Peter Van Gerwen et al., Transducers '97, p. 907-910

[7] Christian Krause et al., Langmuir, Vol. 12, No. 25, 1996 p. 6059-6064

[8] V. M. Mirsky, Biosensors & Bioelectronics 1997, Vol. 12 No. 9-10, pp. 977-989

[9] M. Riepl et al, Mikrochim. Acta, 29-34, 1999

[10] US 6,170,318 B1

[11] EP 1 411 349 A1

[12] DE 102 24 567 A1

[13] US 2002/0140440 A1

**Bezugszeichenliste**

| | |
|---|---|
| 1100 | Sensorelement |
| 1101 | erste Elektrode des Sensorelementes |
| 1102 | zweite Elektrode des Sensorelementes |

(fortgesetzt)

| 1103 | Isolations- bzw Passivierungsschicht |
| 1104 | Querschnittsansicht des Sensorelementes |
| 1105 | Finger der ersten Elektrode |
| 1106 | Finger der zweiten Elektrode |
| 1200 | Querschnittsansicht des Sensorelementes |
| 1201 | Fängermoleküle |
| 1202 | Impedanz |
| 1203 | Elektolyt |
| 1204 | Querschnittsansicht des Sensorelementes |
| 1205 | zu erfassende Partikel |
| 1300 | Querschnittsansicht des Sensorelementes |
| 1301 | Verlauf des elektrischen Feldes |
| 1400 | Querschnittsansicht des Sensorelementes |
| 1401 | variabler ohmscher Widerstand |
| 1402 | variabler ohmscher Widerstand |
| 1403 | variable Kapazität |
| 1404 | variable Kapazität |
| 1405 | variabler ohmscher Widerstand |
| 1406 | variable Kapazität |
| 1500 | Sensor-Anordnung |
| 1501 | Stromquelle |
| 1502 | Referenzspannungsquelle |
| 1503 | Komparator |
| 1504 | erste Schaltereinheit |
| 1505 | zweite Schaltereinheit |
| 1506 | Spannung der ersten Elektrode |
| 1507 | Spannung der zweiten Elektrode |
| 1508 | Ausgangsspannung des Komparators |
| 1509 | erster Negativ-Anschluss des Komparators |
| 1510 | erster Positiv-Anschluss des Komparators |
| 1511 | zweiter Negativ-Anschluss des Komparators |
| 1512 | zweiter Positiv-Anschluss des Komparators |
| 1513 | erster Anschluss der ersten Schaltereinheit |
| 1514 | zweiter Anschluss der ersten Schaltereinheit |
| 1515 | erste Schalterstellung der ersten Schaltereinheit |
| 1516 | zweite Schalterstellung der ersten Schaltereinheit |
| 1517 | erste Schalterstellung der ersten Schaltereinheit |
| 1518 | zweite Schalterstellung der ersten Schaltereinheit |
| 1519 | erster Anschluss der Stromquelle |
| 1520 | zweiter Anschluss der Stromquelle |
| 1521 | erste Schalterstellung der zweiten Schaltereinheit |
| 1522 | zweite Schalterstellung der zweiten Schaltereinheit |
| 1523 | erste Schalterstellung der zweiten Schaltereinheit |
| 1524 | zweite Schalterstellung der zweiten Schaltereinheit |
| 1525 | erster Anschluss der Referenzspannungsquelle |
| 1526 | zweiter Anschluss der Referenzspannungsquelle |
| 1600 | Diagramm der Spannungsverläufe |
| 1601 | Spannungsdiagramm der Sensor-Spannung |
| 1602 | Spannungsdiagramm der Ausgangsspannung des Komparators |
| 1700 | detaillierte Ansicht der Sensoranordnung |
| 1701 | Zähler |

(fortgesetzt)

| | |
|------|------|
| 1702 | Transistoren |
| 1703 | Transistoren |
| 1800 | bevorzugte Ausführungsform der Sensor-Anordnung |
| 1801 | erste Stromquelle |
| 1802 | zweite Stromquelle |
| 1803 | erste Referenzspannungsquelle |
| 1804 | zweite Referenzspannungsquelle |
| 1805 | Komparator |
| 1806 | erste Schaltereinheit |
| 1807 | zweite Schaltereinheit |
| 1808 | Bezugspotential |
| 1809 | Positiv-Anschluss des Komparators |
| 1810 | Negativ-Anschluss des Komparators |
| 1811 | erste Schalterstellung der ersten Schaltereinheit |
| 1812 | zweite Schalterstellung der ersten Schaltereinheit |
| 1813 | erste Schalterstellung der zweiten Schaltereinheit |
| 1814 | zweite Schalterstellung der zweiten Schaltereinheit |
| 1815 | erster Anschluss der ersten Stromquelle |
| 1816 | zweiter Anschluss der ersten Stromquelle |
| 1817 | erster Anschluss der zweiten Stromquelle |
| 1818 | zweiter Anschluss der zweiten Stromquelle |
| 1900 | bevorzugte Ausführungsform der Sensor-Anordnung |
| 1901 | erster ohmscher Widerstand |
| 1902 | zweiter ohmscher Widerstand |
| 2000 | bevorzugte Ausführungsform der Sensor-Anordnung |

**Patentansprüche**

1. Biosensor-Anordnung (1500),

• mit mindestens zwei Elektroden (1101, 1102),
• mit einem Biosensorelement (1100), welches eingerichtet ist zum Erfassen von Biomolekülen, und welches derart eingerichtet ist, dass eine in ihrem Verlauf von einem Sensorereignis abhängige elektrische Spannung an den mindestens zwei Elektroden (1101) bereitgestellt wird,
• mit einem Ansteuerschaltkreis (1501), welcher derart eingerichtet ist, dass ein vorgegebener elektrischer Strom bereitgestellt wird und dass die mindestens zwei Elektroden (1101, 1102) mit dem vorgegebenen elektrischen Strom aufgeladen und/oder entladen werden,
• mit einer Vergleichereinheit (1503), die derart eingerichtet ist, dass die von dem Biosensorelement (1100) bereitgestellte elektrische Spannung mit einer vorgegebenen Referenzspannung ($V_{Ref}$) verglichen wird, und ein Vergleichsergebnis bereitstellt,
• mit einem Auswerteschaltkreis, der derart eingerichtet ist, dass eine für das Aufladen und/oder Entladen der Elektroden von der negativen Referenzspannung ($-V_{Ref}$) auf die positive Referenzspannung ($V_{Ref}$) bzw. von der positiven Referenzspannung ($V_{Ref}$) auf die negative Referenzspannung ($-V_{Ref}$) benötigte Zeitdauer ermittelt wird, die repräsentiert, ob ein Sensorereignis stattgefunden hat oder nicht oder in welchem Umfang ein Sensorereignis an dem Biosensorelement stattgefunden hat,
• mit einer zwischen den Ansteuerschaltkreis (1501) und die Vergleichereinheit (1503) geschalteten Schaltereinheit (1504), wobei die Elektroden (1101, 1102) abhängig von dem Schalterzustand aufgeladen oder entladen werden, und
• mit einer Steuereinheit zum Steuern der Schaltereinheit (1504) derart, dass unter Umschalten der Schaltereinheit (1504) die Elektroden (1101, 1102) wiederholt von der negativen Referenzspannung ($-V_{Ref}$) auf die positive Referenzspannung ($V_{Ref}$) aufgeladen und/oder von der positiven Referenzspannung ($V_{Ref}$) auf die negative Referenzspannung ($-V_{Ref}$) entladen werden.

**2.** Biosensor-Anordnung (1500) gemäß Anspruch 1, wobei die mindestens zwei Elektroden kammförmig ineinander greifend angeordnet sind.

**3.** Biosensor-Anordnung (1500) gemäß Anspruch 1, wobei zwei Elektroden kammförmig ineinander greifend angeordnet sind und wobei eine dritte Elektrode mäanderförmig zwischen den zwei Elektroden angeordnet ist.

**4.** Biosensor-Anordnung (1500) gemäß einem der Ansprüche 1 bis 3, mit einer Spannungsquelle (1502), welche die Referenzspannung ($V_{Ref}$) bereitstellt und mit der Vergleichereinheit (1503) gekoppelt ist.

**5.** Biosensor-Anordnung (1500) gemäß einem der Ansprüche 1 bis 4, wobei die Vergleichereinheit (1503) ein Komparator ist.

**6.** Biosensor-Anordnung (1500) gemäß Anspruch 5, wobei die Steuereinheit derart eingerichtet ist, dass der Schalterzustand der Schaltereinheit (1504) umgeschaltet wird, wenn der Betrag der Spannung zwischen den Elektroden die Referenzspannung ($V_{Ref}$) ist.

**7.** Biosensor-Anordnung (1500) gemäß Anspruch 5 oder 6, mit einer Sensorereignis-Ermittlungseinheit, die derart eingerichtet ist, dass aus den ermittelten Zeitdauern des Auflade-vorgangs und/oder des Entladevorgangs ermittelt wird, ob ein Sensorereignis stattgefunden hat oder nicht.

**8.** Biosensor-Anordnung (1500) gemäß Anspruch 7, wobei die Sensorereignis-Ermittlungseinheit derart eingerichtet ist, dass aus den ermittelten Zeitdauern des Aufladevorgangs und/oder des Entladevorgangs eine Aufladefrequenz und/oder eine Entladefrequenz oder eine Zyklusfrequenz, wobei ein Zyklus jeweils einen Aufladevorgangs und einen Entladevorgang aufweist, ermittelt wird.

**9.** Biosensor-Anordnung (1500) gemäß einem der Ansprüche 1 bis 8, mit einer Mehrzahl von Biosensorelementen (1100).

**10.** Biosensor-Anordnung (1500) gemäß Anspruch 9, wobei die Biosensorelemente (1100) matrixförmig angeordnet sind.

**11.** Verfahren zum Ermitteln eines Sensorereignisses an einem Biosensorelement (1100) welches eingerichtet ist zum Erfassen von Biomolekülen,

• bei dem mindestens zwei Elektroden (1101, 1102) mittels eines vorgegebenen elektrischen Stromes aufgeladen und/oder entladen werden,
• bei dem eine für das Aufladen und/oder Entladen der Elektroden (1101, 1102) von einer negativen Referenzspannung (-$V_{Ref}$) auf eine positive Referenzspannung ($V_{Ref}$) bzw. von der positiven Referenzspannung ($V_{Ref}$) auf die negative Referenzspannung (-$V_{Ref}$) benötigte Zeitdauer ermittelt wird, wobei die Zeitdauer abhängig ist davon, ob ein Sensorereignis an dem Biosensorelement (1100) stattgefunden hat oder nicht oder in welchem Umfang ein Sensorereignis an dem Biosensorelement (1100) stattgefunden hat,
• bei dem unter Verwendung der Zeitdauer ermittelt wird, ob ein Sensorereignis stattgefunden hat oder nicht,
• wobei die Elektroden (1101, 1102) wiederholt von der negativen Referenzspannung (-$V_{Ref}$) auf die positive Referenzspannung ($V_{Ref}$) aufgeladen und/oder von der positiven Referenzspannung ($V_{Ref}$) auf die negative Referenzspannung (-$V_{Ref}$) entladen werden.

**Claims**

**1.** Biosensor arrangement (1500),

• having at least two electrodes (1101, 1102),
• having a biosensor element (1100), which is set up for the detection of biomolecules, and which is set up in such a way that an electrical voltage dependent on a sensor event in terms of its profile is provided at the at least two electrodes (1101),
• having a drive circuit (1501), which is set up in such a way that a predetermined electric current is provided and that the at least two electrodes (1101, 1102) are charged and/or discharged with the predetermined electric current,

- having a comparator unit (1503), which is set up in such a way that the electrical voltage provided by the biosensor element (1100) is compared with a predetermined reference voltage ($V_{Ref}$), and provides a comparison result,
- having an evaluation circuit, which is set up in such a way that a time duration required for the charging and/or discharging of the electrodes from the negative reference voltage ($-V_{Ref}$) to the positive reference voltage ($V_{Ref}$) or from the positive reference voltage ($V_{Ref}$) to the negative reference voltage ($-V_{Ref}$) is determined, which time duration represents whether or not a sensor event has taken place or the extent to which a sensor event has taken place at the biosensor element,
- having a switch unit (1504) connected between the drive circuit (1501) and the comparator unit (1503), the electrodes (1101, 1102) being charged or discharged depending on the switch state, and
- having a control unit for controlling the switch unit (1504) in such a way that, with changeover of the switch unit (1504), the electrodes (1101, 1102) are repeatedly charged from the negative reference voltage ($-V_{Ref}$) to the positive reference voltage ($V_{Ref}$) and/or discharged from the positive reference voltage ($V_{Ref}$) to the negative reference voltage ($-V_{Ref}$).

2. Biosensor arrangement (1500) according to Claim 1, wherein the at least two electrodes are arranged such that they intermesh in comb-type fashion.

3. Biosensor arrangement (1500) according to Claim 1, wherein two electrodes are arranged such that they intermesh in comb-type fashion, and wherein a third electrode is arranged in meandering fashion between the two electrodes.

4. Biosensor arrangement (1500) according to one of Claims 1 to 3, having a voltage source (1502), which provides the reference voltage ($V_{Ref}$) and is coupled to the comparator unit (1503).

5. Biosensor arrangement (1500) according to one of Claims 1 to 4, wherein the comparator unit (1503) is a comparator.

6. Biosensor arrangement (1500) according to Claim 5, wherein the control unit is set up in such a way that the switch state of the switch unit (1504) is changed over if the magnitude of the voltage between the electrodes is the reference voltage ($V_{Ref}$).

7. Biosensor arrangement (1500) according to Claim 5 or 6, having a sensor event determining unit, which is set up in such a way that the fact of whether or not a sensor event has taken place is determined from the determined time durations of the charging operation and/or of the discharging operation.

8. Biosensor arrangement (1500) according to Claim 7, wherein the sensor event determining unit is set up in such a way that a charging frequency and/or a discharging frequency or a cycle frequency, where a cycle in each case has a charging operation and a discharging operation, is determined from the determined time durations of the charging operation and/or of the discharging operation.

9. Biosensor arrangement (1500) according to one of Claims 1 to 8, having a plurality of biosensor elements (1100).

10. Biosensor arrangement (1500) according to Claim 9, wherein the biosensor elements (1100) are arranged in matrix-type fashion.

11. Method for determining a sensor event at a biosensor element (1100) which is set up for the detection of biomolecules,

- in which at least two electrodes (1101, 1102) are charged and/or discharged by means of a predetermined electric current,
- in which a time duration required for the charging and/or discharging of the electrodes (1101, 1102) from a negative reference voltage ($-V_{Ref}$) to a positive reference voltage ($V_{Ref}$) or from the positive reference voltage ($V_{Ref}$) to the negative reference voltage ($-V_{Ref}$) is determined, the time duration being dependent on whether or not a sensor event has taken place at the biosensor element (1100) or the extent to which a sensor event has taken place at the biosensor element (1100),
- in which the time duration is used to determine whether or not a sensor event has taken place,
- wherein the electrodes (1101, 1102) are repeatedly charged from the negative reference voltage ($-V_{Ref}$) to the positive reference voltage ($V_{Ref}$) and/or discharged from the positive reference voltage ($V_{Ref}$) to the negative reference voltage ($-V_{Ref}$).

**Revendications**

1. Agencement ( 1500 ) de biocapteur,

   • comprenant au moins deux électrodes ( 1101, 1102 ),
   • comprenant un élément ( 1100 ) formant biocapteur, qui est agencé pour détecter des molécules biologiques et qui est tel qu'une tension électrique, dépendant dans sa variation d'un évènement du capteur, est appliquée sur les aux moins deux électrodes ( 1101 ),
   • comprenant un circuit ( 1501 ) de commande, qui est tel qu'un courant électrique prescrit est mis à disposition et que les au moins deux électrodes ( 1101, 1102 ) sont chargées par le courant électrique prescrit et/ou en sont déchargées,
   • comprenant une unité ( 1503 ) de comparaison, qui est telle que la tension électrique appliquée par l'élément ( 1100 ) formant biocapteur est comparée à une tension ( $V_{Ref}$ ) de référence prescrite et un résultat de comparaison est mis à disposition,
   • comprenant un circuit d'exploitation, qui est tel qu'il est déterminé une durée nécessaire pour le chargement et/ou le déchargement des électrodes de la tension ( $-VR_{ef}$ ) de référence négative à la tension ( $V_{Ref}$ ) de référence positive ou de la tension ( $V_{Ref}$ ) de référence positive à la tension ( $-VR_{ef}$ ) de référence négative, durée qui représente si un évènement de capteur a eu lieu ou n'a pas eu lieu ou dans quelle mesure un évènement de capteur a eu lieu sur l'élément formant biocapteur,
   • comprenant une unité ( 1504 ) de commutation entre le circuit ( 1501 ) de commande et l'unité ( 1503 ) de comparaison, les électrodes ( 1101, 1102 ) étant chargées ou déchargées en fonction de l'état de commutation, et
   • comprenant une unité de commande pour commander l'unité ( 1504 ) de commutation de manière à ce que, par commutation de l'unité ( 1504 ) de commutation, les électrodes ( 1501, 1502 ) soient chargées de manière répétée de la tension ( $-VR_{ef}$ ) de référence négative à la tension ( $V_{Ref}$ ) de référence positive et/ou soit déchargée de la tension ( $V_{Ref}$ ) de référence positive à la tension ( $-VR_{ef}$ ) de référence négative.

2. Agencement ( 1500 ) de biocapteur suivant la revendication 1, dans lequel les au moins deux électrodes pénètrent les unes dans les autres en forme de peigne.

3. Agencement ( 1500 ) de biocapteur suivant la revendication 1, dans lequel deux électrodes pénètrent l'une dans l'autre en forme de peigne et une troisième électrode est montée sinueuse entre les deux électrodes.

4. Agencement ( 1500 ) de biocapteur suivant l'une des revendications 1 à 3, comprenant une source ( 1502 ) de tension, qui applique la tension ( $V_{Ref}$ ) de référence et qui est couplée à l'unité ( 1503 ) de comparaison.

5. Agencement ( 1500 ) de biocapteur suivant l'une des revendications 1 à 4, dans lequel l'unité ( 1503 ) de comparaison est un comparateur.

6. Agencement ( 1500 ) de biocapteur suivant la revendication 5, dans lequel l'unité de commande est telle que l'état de commutation de l'unité ( 1504 ) de commutation est commuté lorsque la valeur de la tension entre les électrodes et la tension ( $V_{Ref}$ ) de référence.

7. Agencement ( 1500 ) de biocapteur suivant la revendication 5 ou 6, comprenant une unité de détermination d'un évènement de capteur, qui est telle qu'il est déterminé à partir des durées déterminées de l'opération de charge et/ou de l'opération de décharge si un évènement de capteur a eu lieu ou n'a pas eu lieu.

8. Agencement ( 1500 ) de biocapteur suivant la revendication 7, dans lequel l'unité de détermination d'un évènement de capteur est telle qu'il est déterminé à partir des durées déterminées de l'opération de charge et/ou de l'opération de décharge une fréquence de charge et/ou une fréquence de décharge et/ou une fréquence de cycle, un cycle ayant respectivement une opération de charge et/ou une opération de décharge.

9. Agencement ( 1500 ) de biocapteur suivant l'une des revendications 1 à 8, comprenant une multiplicité d'éléments ( 1100 ) formant biocapteur.

10. Agencement ( 1500 ) de biocapteur suivant la revendication 9, dans lequel les éléments ( 1100 ) formant biocapteur sont disposés sous la forme d'une matrice.

**11.** Procédé de détermination d'un évènement de capteur sur un élément ( 1100 ) formant biocapteur qui est conçu pour détecter des molécules biologiques,

  • dans lequel on charge et/ou on décharge au moins deux électrodes ( 1101, 1102 ) au moyen d'un courant électrique prescrit,
  • dans lequel on détermine une durée nécessaire pour la charge et/ou pour la décharge des électrodes ( 1101, 1102 ) d'une tension ( $-V_{Ref}$ ) de référence négative à une tension ( $V_{Ref}$ ) de référence positive ou de la tension ( $V_{Ref}$ ) de référence positive à la tension ( $-VR_{ef}$ ) de référence négative, la durée dépendant du point de savoir si un évènement de capteur a eu lieu sur l'élément ( 1100 ) formant biocapteur ou n'a pas eu lieu ou dans quelle mesure un évènement de capteur a eu lieu sur l'élément ( 1100 ) formant biocapteur,
  • dans lequel on détermine en utilisant la durée si un évènement de capteur a eu lieu ou n'a pas eu lieu,
  • dans lequel on charge les électrodes de manière répétée de la tension ( $-VR_{ef}$ ) de référence négative à la tension ( $V_{Ref}$ ) de référence positive et/ou on décharge de manière répétée les électrodes ( 1101, 1102 ) de la tension ( $V_{Ref}$ ) de référence positive à la tension ( $-V_{Ref}$ ) de référence négative.

FIG 1   Stand der Technik

FIG 2A  Stand der Technik

FIG 2B  Stand der Technik

FIG 2C  Stand der Technik

## FIG 2D  Stand der Technik

## FIG 2E  Stand der Technik

## FIG 2F  Stand der Technik

## FIG 3A  Stand der Technik

300

302

301

I

I'

303

## FIG 3B  Stand der Technik

300

302 302 302 302 302 302 302 302

303 303 303 303 303 303 303 303

301

304

305

FIG 4B  Stand der Technik

FIG 4A  Stand der Technik

FIG 5   Stand der Technik

FIG 6   Stand der Technik

FIG 7A Stand der Technik

FIG 7B Stand der Technik

**FIG 8A** Stand der Technik

800

802

802

801

II

803

II'

802    802

**FIG 8B** Stand der Technik

800

805

805    805

804

801

802    802    802    803

806

EP 1 789 811 B1

FIG 9  Stand der Technik

FIG 10  Stand der Technik

32

## FIG 11

E1 1101

1100

1105

1106

Draufsicht:

E2 1102

Isolation/
Passivierung ~1103

E1 E1 E1 E1 E1 E1 E1 E1 E1 E1

Querschnitt: 1104

## FIG 12A

Fängermoleküle      Elektrolyt

1200

1202

1203

1201

1201

$\overline{Z}$

1100

E1 1101      E2 1102

Nach Immobilisierung

## FIG 12B

Ziel-Moleküle

1204

1202

1201

1205

$\overline{Z}$

1203

1100

E1 1101      E2 1102

Nach Hybridisierung

# FIG 13

1301       1301       1301

1102

1101

1103

E2      E1     Isolation/    E2      E1

Passivierung

EP 1 789 811 B1

**FIG 14**

**FIG 15**

**FIG 16**

FIG 17

EP 1 789 811 B1

36

**FIG 18**

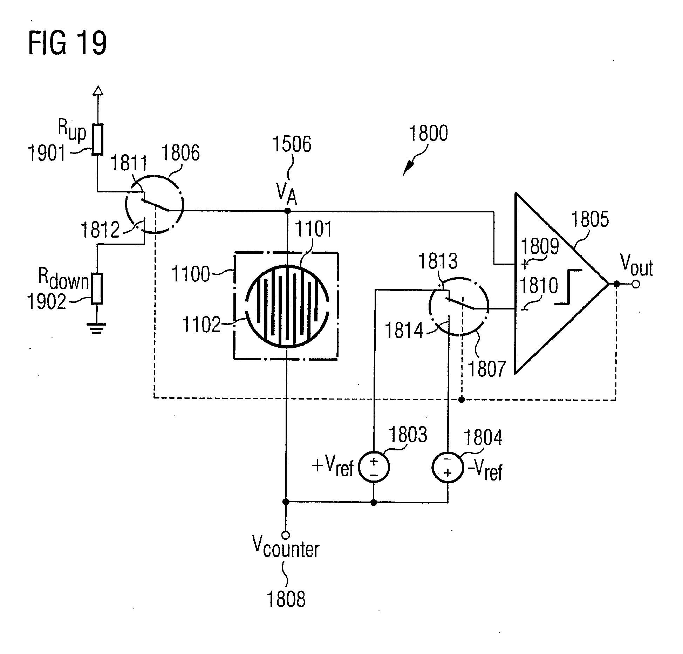

# FIG 19

$R_{up}$
1901

1811  1806

1812

$R_{down}$
1902

1100

1101

1102

1506

$V_A$

1800

1813

1814  1807

1809
+

1810

1805

$V_{out}$

+$V_{ref}$  1803

1804  −$V_{ref}$

$V_{counter}$

1808

FIG 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9322678 A
- DE 19610115 A1
- US 60007840 B
- US 6170318 B1
- EP 1411349 A1
- DE 10224567 A1
- US 20020140440 A1

**In der Beschreibung aufgeführte Nicht-Patentliteratur**

- **M. PAESCHKE et al.** *Electroanalysis,* 1996, vol. 7 (1), 1-8
- Microbiosensors using electrodes made in Si-technology. **R. HINTZSCHE et al.** Frontiers in Biosensorics I - Fundamental Aspects. Birkhauser Verlag, 1997
- **PETER VAN GERWEN et al.** *Transducers '97,* 1997, 907-910
- **CHRISTIAN KRAUSE et al.** *Langmuir,* 1996, vol. 12 (25), 6059-6064
- **V. M. MIRSKY.** *Biosensors & Bioelectronics,* 1997, vol. 12 (9-10), 977-989